# EUROPÄISCHE PATENTSCHRIFT

(11) **EP 3 049 174 B1**
(45) Veröffentlichungstag und Bekanntmachung des Hinweises auf die Patenterteilung: **08.11.2017**
(21) Anmeldenummer: 14750311.4
(22) Anmeldetag: 05.08.2014
(51) Int. Cl.: B01D 3/00, B01D 3/18, B01D 3/32, B01D 3/14, B01D 53/14, B01D 53/18, C10K 1/18, B01D 3/16, B01D 3/22, B01D 3/28

(54) **ÖLWASCHKOLONNE**
OIL WASHING COLUMN
COLONNE DE NETTOYAGE D'HUILE

(30) Priorität: 25.09.2013 EP 13004649
(43) Veröffentlichungstag der Anmeldung: 03.08.2016
(73) Patentinhaber: Linde Aktiengesellschaft, 80331 München (DE)
(72) Erfinder: ALZNER, Gerhard, 81476 München (DE); MATTEN, Christian, 82049 Pullach (DE)
(74) Vertreter: Meilinger, Claudia Sabine
(86) Internationale Anmeldenummer: PCT/EP2014/002148
(87) Internationale Veröffentlichungsnummer: WO 2015/043699

(56) Entgegenhaltungen:
- WO-A1-2013/149721
- DE-A1-102006 045 498
- DE-A1-102007 056 964
- US-A- 5 080 837
- US-A- 5 223 183
- US-A- 5 407 605

## Beschreibung

Die Erfindung betrifft eine Ölwaschkolonne gemäß Anspruch 1.
Eine derartige Kolonne weist einen entlang einer Längsachse erstreckten Mantel auf, der einen Innenraum der Kolonne begrenzt, wobei der Innenraum zumindest in einen Benzinabschnitt und einen entlang der Längsachse darunter angeordneten, separaten Ölabschnitt unterteilt ist, wobei im Benzinabschnitt mehrere, insbesondere quer zur Längsachse bzw. entlang des Kolonnenquerschnitts erstreckte erste Stoffaustauschböden und im Ölabschnitt mehrere, insbesondere quer zur Längsachse bzw. entlang des Kolonnenquerschnitts erstreckte zweite Stoffaustauschböden angeordnet sind. Die Ölwaschkolonne ist dabei dazu ausgebildet, einen Spaltgasstrom durch die zweiten Stoffaustauschböden im Ölabschnitt und sodann durch die ersten Stoffaustauschböden im Benzinabschnitt zu führen, wobei die Ölwaschkolonne die zweiten Austauschböden mit einem flüssigen, kohlenwasserstoffhaltigen zweiten Waschmittel (insbesondere mit einer Ölfraktion) beaufschlägt, um einen Stoffaustausch zwischen dem besagten Spaltgasstrom und jenem zweiten Waschmittel herzustellen, so dass im Ölabschnitt eine Ölfraktion aus dem Spaltgasstrom abgetrennt wird, und wobei die Ölwaschkolonne die ersten Stoffaustauschböden mit einem flüssigen, kohlenwasserstoffhaltigen ersten Waschmittel beaufschlägt (insbesondere mit einer Benzinfraktion), um einen Stoffaustausch zwischen dem Spaltgasstrom und jenem ersten Waschmittel herzustellen, so dass im Benzinabschnitt eine Benzinfraktion aus dem Spaltgas abgetrennt wird, die leichter-siedend ist als jene Ölfraktion.

Kolonnen, wie in dem Dokument DE 10 2006 045498, werden z.B. bei der Herstellung von Olefinen (wie z.B. Ethylen oder Propylen) zum Kühlen und Reinigen eines jene Olefine aufweisenden Spaltgasstromes verwendet, der durch thermische Spaltung eines kohlenwasserstoffhaltigen Einsatzes erzeugt wird. Die längerkettigen Kohlenwasserstoffe des kohlenwasserstoffhaltigen Einsatzes werden dabei unter Anwesenheit von Dampf und hohen Temperaturen thermisch in kürzerkettige Kohlenwasserstoffe (z.B. in die gewünschten Produkte Ethylen und/oder Propylen) aufgespalten. Derartige Verfahren werden als Steamcracken oder Pyrolyse von Kohlenwasserstoffen bezeichnet.

Die kohlenwasserstoffhaltigen Einsätze können dabei sehr verschieden hinsichtlich der Zusammensetzung und des Gemisches aus einzelnen längerkettigen Kohlenwasserstoffen sowie im Aggregatzustand sein. Es werden dabei sowohl gasförmige Einsätze als auch flüssige Einsätze gespalten, wobei die flüssigen Einsätze in der Regel höhere Anteile an längerkettigen Kohlenwasserstoffen und einen daraus resultierenden höheren Siedepunkt aufweisen. Als derartige flüssige Einsätze kommen beispielsweise Naphtha oder Gaskondensate in Frage. Ein typischer Naphthaeinsatz hat einen Siedepunkt im Bereich zwischen 160°C und 170 °C, während für gewöhnlich Gaskondensate einen Siedepunkt über 250 °C aufweisen.

Der kohlenwasserstoffhaltige Einsatzstoff (wie z.B. Naphtha) wird zur Spaltung in die Konvektionszone eines Spaltofens geführt, insbesondere auf 550 °C bis 650 °C vorgewärmt und in die gasförmige Phase überführt. In der Konvektionszone wird dem kohlenwasserstoffhaltigen Einsatzdampf nunmehr heißer Prozessdampf zugegeben. Das gasförmige Gemisch aus kohlenwasserstoffhaltigem Einsatz und Wasserdampf wird aus der Konvektionszone in die beheizten Spalt- oder Pyrolyserohre des Spalt- oder Pyrolyseofens geführt. Im Inneren der beheizten Spaltrohre herrschen dabei insbesondere Temperaturen im Bereich von 800 °C bis 850 °C, die zur Aufspaltung der längerkettigen Kohlenwasserstoffe des Einsatzes in kürzerkettige, bevorzugt gesättigte Kohlenwasserstoffe, führen. Der zugegebene Prozessdampf dient dabei der Partialdruckerniedrigung der einzelnen Reaktionsteilnehmer, sowie der Verhinderung einer erneuten Aneinanderlagerung bereits gespaltener, kürzerkettiger Kohlenwasserstoffe. Die Verweilzeit in den Spaltrohren des Spaltofens beträgt dabei typischerweise zwischen 0,2 und 0,6 Sekunden.

Der mit einer Temperatur von ca. 850 °C aus dem Spaltofen austretende Spaltgasstrom besteht zum größten Teil aus Ethan, anderen Olefinen (Propen) und Diolefinen und wird rasch auf ca. 400 °C abgekühlt, um Sekundärreaktionen der sehr reaktionsfreudigen Spaltprodukte zu vermeiden. Der derart abgekühlte Spaltgasstrom wird als erstes der oben erläuterten Ölwaschkolonne zugeführt. Diese dient dazu, den erzeugten Spaltgasstrom weiter abzukühlen und in einem ersten Zerlegungsschritt eine Fraktion aus schwersiedenden Kohlenwasserstoffen (z.B. Ölfraktion bzw. Leichtölfraktion und Schwerölfraktion) sowie leichter siedenden Kohlenwasserstoffen (z.B. Benzinfraktion) auszukondensieren und vom Spaltgas abzutrennen. Um insbesondere die Wärme des Spaltgases in der Anlage weiter zu nutzen, weist die abgetrennte Ölfraktion bzw. Leicht- oder Schwerölfraktion eine Mindesttemperatur auf und wird in weiteren Prozessschritten der Anlage als Wärmeträger eingesetzt.

Das größte Problem derartiger Ölwaschkolonnen ist die Verschmutzung der einzelnen Stoffaustauschböden durch Polymerbildung (so genanntes Fouling). Dabei liegen der Polymerbildung im Wesentlichen zwei Mechanismen zugrunde.

Zum einen enthalten die kondensierenden Komponenten Monomere (dies sind beispielsweise ungesättigte Kohlenwasserstoffe wie Naphtene, Indene oder Styrene). Diese Monomere können unter bestimmten Bedingungen Polymere bilden. Diese Bedingungen wären polymerisationsfähiger Temperaturbereich, Auftreten der Monomere in hinreichend großer Konzentration, große Verweilzeit auf den Einbauten und die Anwesenheit von Rost. Diese Einflüsse werden als "fouling factors" bezeichnet. Optimalerweise ist das Zustandekommen aller vier Bedingungen zu verhindern.

Zum anderen verdampft der größte Teil der flüssigen Kohlenwasserstoffe, die dem Benzinabschnitt als erstes Waschmittel aufgegeben werden, über den Benzinabschnitt auf dem Weg nach unten. Dies führt dazu, dass am unteren Ende des Benzinabschnitts die geringste Flüssigkeitsmenge und somit die größte Verweildauer der Flüssigkeit auf den Stoffaustauschböden bzw. -elementen vorhanden ist. Zusätzlich steigen bei steigendem Rückfluss die Verdampfung der längerkettigen Kohlenwasserstoffe und damit die Temperatur des gasförmigen Kopfproduktes an.

Daher kommt es häufig bei Ölwaschkolonnen nach dem Stand der Technik zu Polymerbildung und zur Verlegung der unteren Stoffaustauschböden des Benzinabschnittes. Im Stand der Technik versucht man, diese Verschmutzungsproblematik zu verhindern, indem im Ölabschnitt side-to-side baffles verwendet werden und im Benzinabschnitt eine vergleichsweise große Anzahl an austauschwirksamen Stoffaustauschböden, z.B. in Form von Sieb- oder Ventilböden, so dass insgesamt eine Ölwaschkolonne von unvorteilhaft großer Bauhöhe bezüglich der Längsachse resultiert. Bei den side-to-side baffles bzw. Kolonnenböden handelt es sich um ein- oder mehrflutige, insbesondere geneigte (oder auch waagerechte) Kolonnenböden, die entlang der Längsachse der Ölwaschkolonne übereinander angeordnet sind und sich jeweils über einen Teil des Kolonnenquerschnitts erstrecken, wobei je zwei benachbarte, übereinander angeordnete side-to-side baffles versetzt zueinander angeordnet sind, so dass eine vom oberen Kolonnenboden abfließende flüssige Phase den darunter liegenden Kolonnenboden beaufschlägt. Die flüssige Phase fließt entsprechend auf ihrem Weg nach unten in der Ölwaschkolonne hin und her.

Der vorliegenden Erfindung liegt hiervon ausgehend die Aufgabe zugrunde, eine Ölwaschkolonne der eingangs erwähnten Art vergleichsweise kleinbauend zu halten und dabei gleichzeitig dem vorgenannten Verschmutzungsrisiko entgegenzuwirken.

Dieses Problem wird durch eine Ölwaschkolonne mit den Merkmalen des Anspruchs 1 gelöst.

Danach ist vorgesehen, dass die zweiten Stoffaustauschböden jeweils eine Mehrzahl an parallel und beabstandet zueinander verlaufenden Ablaufelementen, insbesondere in Form von Winkelprofilen, aufweisen, wobei die Ablaufelemente jeweils eine erste und eine zweite Ablauffläche aufweisen, wobei die beiden Ablaufflächen entlang der Längsachse zum Benzinabschnitt hin aufeinander zu laufen und unter Ausbildung einer quer zur Längsachse bzw. entlang des Kolonnenquerschnitts erstreckten Kante aufeinandertreffen, so dass das auf die Kanten der Ablaufelemente aufgegebene zweite Waschmittel zu beiden Seiten der jeweiligen Kante über die Ablaufflächen vom jeweiligen Ablaufelement abfließt, und wobei im Ölabschnitt eine größere Anzahl an zweiten Stoffaustauschböden vorhanden ist als erste Stoffaustauschböden im Benzinabschnitt, und wobei der Benzinabschnitt entlang der Längsachse eine geringere Länge aufweist als der Ölabschnitt, und wobei die ersten Stoffaustauschböden als Siebböden, Glockenböden und/oder Ventilböden ausgebildet sind. Die Kanten der Ablaufelemente können auch abgerundet ausgebildet sein. Vorzugsweise weisen die Ablaufelemente eine akzentuierte Kante auf.

Bei Siebböden handelt es sich um Kolonnenböden mit einem Ablaufschacht, über den das Waschmittel auf darunter befindliche Kolonnenböden gelangt, wobei Siebböden eine Mehrzahl an Durchgangsöffnungen aufweisen, durch die das Spaltgas strömt und das auf dem jeweiligen Siebboden befindliche Waschmittel kontaktiert. Glockenböden können ebenfalls einen Ablaufschacht aufweisen. Weiterhin sind bei Glockenböden die Durchgangsöffnungen von Kaminhälsen eingefasst, die von Hauben überdacht sind, wobei insbesondere die Kaminhälse in die jeweils zugeordnete Haube hinein ragen. Ventilböden können ebenfalls einen Ablaufschacht aufweisen. Des Weiteren können bei Ventilböden die besagten Durchgangsöffnungen durch Ventile, insbesondere Ventildeckel, verschlossen werden, die bei hinreichendem Spaltgasdruck aufgedrückt werden, so dass das Spaltgas von unten nach oben durch die Durchgangsöffnungen strömen kann. Neben beweglichen Ventilen können auch sogenannte Fixed Valves, d.h., feststehende Ventildeckel mit Promotoreneffekt, verwendet werden.

Weiterhin erstreckt sich vorzugsweise der den Sumpf der Ölwaschkolonne aufweisende Ölabschnitt entlang der Längsachse hin zum Benzinabschnitt, der sich an den Ölabschnitt anschließt (z.B. über den besagten Kaminboden), wobei der Benzinabschnitt den Kopf der Ölwaschkolonne aufweist, aus dem der abgekühlte und gereinigte Spaltgasstrom abziehbar ist.

Wie bereits eingangs erläutert, besteht im unteren Teil des Benzinabschnittes, insbesondere auf den untersten Stoffaustauschböden des Benzinabschnitts der Ölwaschkolonne die größte Gefahr einer Verschmutzung bzw. Verlegung durch Polymerbildung. Im Stand der Technik wurde insbesondere versucht, diesem Umstand durch eine Steigerung der Anzahl der Stoffaustauschböden (insbesondere in Form von Sieb- oder Ventilböden) im Benzinabschnitt entgegenzuwirken (siehe oben), was zu enormen Kolonnenlängen entlang der Längsachse führt. Versuche bzw. Untersuchungen zeigen jedoch, dass hierdurch der besagten Polymerbildung im Benzinabschnitt nicht wirksam entgegengetreten werden kann.

Die vorliegende Erfindung hingegen ermöglicht mit Vorteil einen kleinbauenden Benzinabschnitt bzw. vergleichsweise kleinbauende Ölwaschkolonne bezüglich der Längsachse, da erkannt wurde, dass die besagte Polymerbildung im Benzinabschnitt unterdrückt werden kann, wenn im Ölabschnitt im Vergleich zu den herkömmlichen side-to-side baffles (siehe oben) austauschwirksamere zweite Stoffaustauschböden eingesetzt werden, nämlich solche mit den oben beschriebene Ablaufelementen, die die polymerisierfähigen, ungesättigten Kohlenwasserstoffe von den ersten Stoffaustauschböden (auch als Benzinböden bezeichnet) fernhalten. Mit anderen Worten fallen aufgrund der erfindungsgemäßen zweiten Stoffaustauschböden die besagten Monomere bzw. Verschmutzungen im Ölabschnitt und nicht im Benzinabschnitt an.

Eine Vergrößerung der Anzahl der Stoffaustauschböden im Benzabschnitt mindert das Polymerisationsproblem hingegen nicht.

Die erfindungsgemäßen zweiten Stoffaustauschböden ermöglichen mit Vorteil die Erzeugung einer Vielzahl von Vorhängen aus der flüssiger Phase (z.B. Ölfraktion), nämlich durch die von den Ablaufflächen abfließende flüssige Phase, sowie ggf. zusätzlich die Erzeugung einer Zweiphasenschicht auf den Ablaufflächen, was zu einem guten Wirkungsgrad beiträgt. Diesbezüglich hat sich in Versuchen gezeigt, dass die erfindungsgemäßen Stoffaustauschböden, die auch als Kaskadenböden bezeichnet werden, mit Dual-Flow-Böden vergleichbar sind (hierbei handelt es sich um Kolonnenböden ohne Ablaufschacht mit vergleichsweise großen Durchgangsöffnungen, z.B. mit einem Durchmesser im Bereich von 20mm bis 40mm, durch die Gas und Flüssigkeit im Gegenstrom strömen). Weiterhin hat sich in Versuchen gezeigt, dass die besagten Kaskadenböden bzw. erfindungsgemäßen zweiten Stoffaustauschböden hinsichtlich der Kapazität den einflutigen side-to-side baffles überlegen sind.

Aufgrund ihres Aufbaus sind die erfindungsgemäßen zweiten Stoffaustauschböden mit Vorteil verschmutzungsunanfällig, da bspw. keine kleinflächigen Öffnungen vorhanden sind, die schnell zuwachsen könnten. Der Wirkungsgrad ist relativ hoch, und zwar gemäß Versuchen etwa doppelt so hoch wie der von ein- oder zweiflutigen side-to-side baffles. Des Weiteren übersteigt ihre Kapazität die der side-to-side baffles. Gleichfalls weisen die erfindungsgemäßen Stoffaustauschböden aufgrund der winkligen Ablaufelemente eine vergleichsweise hohe strukturelle Festigkeit auf.

Bei Ablaufelementen in Form von (insbesondere gleichschenkligen) Winkelprofilen weisen die Ablaufelemente zwei Schenkel auf, die entlang der Längsachse in Richtung auf einen darüber angeordneten Flüssigkeitsverteiler winklig aufeinander zu laufen und unter Ausbildung einer entlang des Kolonnenquerschnitts bzw. quer zur Längsachse erstreckten Kante aufeinandertreffen. Die Ablaufflächen des jeweiligen Ablaufelementes bzw. Winkelprofils werden dann durch die nach oben gewandten (d.h., dem Flüssigkeitsverteiler zugewandten) Oberseiten der Schenkel gebildet.

Vorzugsweise schließen die Schenkel bzw. Ablaufflächen einen Winkel im Bereich von 80° bis 100° ein, insbesondere einen Winkel von 90°. Des Weiteren weisen die Ablaufflächen eine Breite quer zu Ihrer Längserstreckungsrichtung auf, die im Bereich von 40mm bis 150mm, vorzugsweise 100mm, liegt.

Die besagte Längsachse der Ölwaschkolonne bzw. des Mantels der Ölwaschkolonne erstreckt sich bevorzugt - bezogen auf eine bestimmungsgemäß angeordnete und betriebsbereite Ölwaschkolonne - entlang der Vertikalen. Der Mantel der Ölwaschkolonne ist zumindest abschnittsweise zylindrisch ausgebildet, wobei die Längsachse der Ölwaschkolonne in diesem Fall mit der Zylinderachse des Mantels zusammenfällt.

Die Ablaufelemente bzw. deren Ablaufflächen (oder die besagten Schenkel) sind bevorzugt längserstreckt ausgebildet, d.h., sie weisen entlang ihrer Längserstreckungsrichtung eine größere Länge auf als quer zu dieser Richtung, und erstrecken sich bevorzugt über den gesamten Kolonnenquerschnitt, d.h., von einem Innenseitenbereich des Mantels hin zu einem gegenüberliegenden Innenseitenbereich des Mantels der Ölwaschkolonne. Die Ablaufelemente können dabei aus mehreren Segmenten, die jeweils für sich wie ein Ablaufelement ausgebildet sind und die entlang der Längserstreckungsrichtung hintereinander angeordnet sind, zusammengesetzt sein. Ein zwischen zwei solchen Segmenten vorhandener Spalt (der die Ablaufflächen des zusammengesetzten Ablaufelementes unterbricht) kann durch ein Kappenelement, das an den beiden Ablaufflächensegmenten des jeweiligen Segments anliegt, verdeckt werden, so dass sich insgesamt ein einheitlich anmutendes Ablaufelement ergibt, das sich insbesondere im Wesentlichen entlang des gesamten Kolonnenquerschnitts von einem Innenseitenbereich des Mantels der Ölwaschkolonne zu einem gegenüberliegenden Innenseitenbereich des Mantels der Ölwaschkolonne erstreckt.

Die zweiten Stoffaustauschböden erstrecken sich jeweils vorzugsweise über den gesamten Kolonnenquerschnitt quer zur Längsachse, wobei die parallel zueinander verlaufenden Ablaufelemente vorzugsweise quer zu Ihrer Längserstreckungsrichtung äquidistant zueinander angeordnet sind, so dass je zwei benachbarte Ablaufelemente eine längliche Durchgangsöffnung oder Lücke des Stoffaustauschbodens definieren, durch die hindurch eine gasförmige Phase (z.B. ein Spaltgasstrom) in der Kolonne entlang der Längsachse des Mantels der Kolonne aufsteigen kann. Benachbarte Ablaufelemente eines zweiten Stoffaustauschbodens weisen dabei bevorzugt einen Abstand ihrer Kanten im Bereich von 150mm bis 300mm auf, wobei auch Abweichungen hiervon möglich sind. Der besagte Abstand ist jeweils so bemessen, dass die von den Ablaufelementen abfließende flüssige Phase auf die darunter angeordneten Ablaufelemente auftrifft.

Die zweiten Stoffaustauschböden sind vorzugsweise so übereinander angeordnet, dass die Ablaufelemente zweier benachbarter zweiter Stoffaustauschböden versetzt zueinander angeordnet sind, wobei die Ablaufelemente des jeweils unteren zweiten Stoffaustauschbodens jeweils entlang der Längsachse mittig unter einer z.B. durch zwei benachbarte Ablaufelemente des jeweils oberen zweiten Stoffaustauschbodens begrenzten Durchgangsöffnung angeordnet sind.

Die zweiten Stoffaustauschböden weisen weiterhin bevorzugt einen Tragring auf, über den der jeweilige zweite Stoffaustauschboden insbesondere am Mantel festgelegt ist, wobei der Tragring vorzugsweise an einer Innenseite des Mantels der Ölwaschkolonne entlang des besagten Kolonnenquerschnitts umläuft. Die Ablaufelemente liegen dabei bevorzugt jeweils mit einem ersten und einem gegenüberliegenden zweiten Endbereich auf dem Tragring auf. Hierbei ist einer der Endbereiche über ein Festlager auf dem Tragring gelagert, der andere Endbereich über ein Gleitlager. Besteht ein Ablaufelement aus mehreren Segmenten, so ist pro Segment ein Festlager vorgesehen, die anderen Lager des betreffenden Segmentes sind Gleitlager.

Des Weiteren können die Ablaufelemente durch einen, zwei oder mehrere parallel zueinander verlaufende, entlang des besagten Kolonnenquerschnitts erstreckte Träger (insbesondere Profilträgern) unterstützt sein, die quer zu den Ablaufelementen verlaufen und auf denen die Ablaufelemente bzw. deren Komponenten (siehe oben) aufliegen. Derartige Träger greifen dabei mit Ihren einander gegenüberliegenden Endbereichen vorzugsweise jeweils unter den Tragring und sind dabei jeweils auf einer Seite über ein unterhalb des Tragrings angeordnetes Gleitlager mit dem Mantel verbunden und auf der anderen Seite über ein unterhalb des Tragrings angeordnetes Festlager.

Bevorzugt weist die Ölwaschkolonne an einem unteren Bereich des Ölabschnitts einen Einlass zum Einlassen des Spaltgasstromes auf, wobei die Ölwaschkolonne - sofern ein nicht weiter unterteilter Ölabschnitt bzw. eine 1-Kreis-Ölwäsche vorhanden ist - vorzugsweise so ausgebildet ist, dass der eingespeiste Spaltgasstrom in der Ölwaschkolonne durch die im Ölabschnitt übereinander angeordneten zweiten Stoffaustauschböden aufsteigt.

Dabei ist die Ölwaschkolonne bevorzugt dazu ausgebildet, jene zweiten Stoffaustauschböden im Gegenstrom mit dem zweiten Waschmittel zu beaufschlagen, so dass ein Stoff- bzw. Energieaustausch zwischen dem Spaltgasstrom und dem ersten Waschmittel erzeugt wird. Hierbei werden bevorzugt schwerere Kohlenwasserstoffe mit beispielsweise vorwiegend mehr als 10 Kohlenstoffatomen aus dem Spaltgasstrom abgetrennt, die sich im Sumpf der Ölwaschkolonne bzw. des Ölabschnitts als Ölfraktion sammeln. Diesbezüglich ist die Ölwaschkolonne bevorzugt dazu ausgebildet jene Ölfraktion aus dem Sumpf abzuziehen, abzukühlen und ggf. von Kokspartikeln zu reinigen sowie zumindest teilweise als zweites Waschmittel bzw. als Bestandteil des zweiten Waschmittels in den Ölabschnitt zurückzuführen (siehe unten).

Weiterhin ist die Ölwaschkolonne bevorzugt dazu ausgebildet, den besagten Spaltgasstrom hiernach, insbesondere über einen Kaminboden, in den Benzinabschnitt zu führen, wobei die Ölwaschkolonne vorzugsweise dazu ausgebildet ist, die übereinander angeordneten ersten Stoffaustauschböden des Benzinabschnitts mit dem ersten Waschmittel zu beaufschlagen, wobei aus dem Spaltgasstrom, der durch die Ölwaschkolonne im Gegenstrom durch die ersten Stoffaustauschböden geführt wird, leichtere Kohlenwasserstoffe mit beispielsweise 10 oder auch weniger Kohlenstoffatomen aus dem Spaltgasstrom abgetrennt werden (z.B. Naphtalin C₁₀H₈). Die Ölwaschkolonne ist weiterhin vorzugsweise dazu ausgebildet, die abgetrennten Kohlenwasserstoffe, die eine Benzinfraktion darstellen, im Benzinabschnitt von einem untersten ersten Stoffaustauschboden abzuziehen oder auf jenem Kaminboden, der den Benzinabschnitt vom Ölabschnitt trennt, zu sammeln und dann abzuziehen.

Weiterhin ist die Ölwaschkolonne bevorzugt dazu ausgebildet, einen Teil der aus dem Benzinabschnitt abgezogenen Benzinfraktion der aus dem Sumpf der Ölwaschkolonne bzw. des Ölabschnitts abgezogenen (Ölfraktion hinzuzugeben und dieses Gemisch als zweites Waschmittel in den Ölabschnitt zurückzuführen und dort auf einen obersten zweiten Stoffaustauschboden erneut aufzugeben. Durch das Zugeben der Benzinfraktion kann u.a. eine gewünschte Viskosität des zweiten Waschmittels eingestellt werden.

Vorzugsweise ist die Ölwaschkolonne des Weiteren dazu ausgebildet, einen Teil der aus dem Benzinabschnitt abgezogenen Benzinfraktion zusätzlich wieder in den Benzinabschnitt zurückzuführen, und zwar auf einen der unteren ersten Stoffaustauschböden. Hierdurch kann die Flüssigkeitsmenge im unteren Teil des Benzinabschnitts erhöht werden, was der Polymerisation in diesem Bereich zusätzlich entgegenwirkt, da die Verweilzeit der Monomere auf den unteren ersten Stoffaustauschböden durch eine entsprechend dimensionierte Zirkulation der flüssigen Phase, d.h., der Benzinfraktion, im Benzinabschnitt verringert werden kann.

Gemäß einer weiteren Ausführungsform der Erfindung ist vorgesehen, dass der Ölabschnitt in einen Leichtölabschnitt und einen entlang der Längsachse darunter angeordneten, separaten Schwerölabschnitt unterteilt ist, wobei insbesondere der Leichtöl- und der Schwerölabschnitt mittels eines Kaminbodens voneinander getrennt sind. Ein Schwerölabschnitt wird insbesondere zur Behandlung von Spaltgasströmen eingesetzt, der durch Dampfspaltung von schwereren flüssigen Einsätzen (z.B. schwerer als Naphtha) gewonnen wurden. Mit anderen Worten kann der zweite Abschnitt also als einheitlicher Ölabschnitt ausgebildet sein (siehe oben) oder in einen Leichtöl- und einen Schwerölabschnitt unterteilt sein, in denen anstelle einer Ölfraktion eine Leichtöl- bzw. eine Schwerölfraktion anfallen.

Vorzugsweise ist die Ölwaschkolonne bei Vorhandensein eines Schwerölabschnittes dazu ausgebildet, den Spaltgasstrom über den nunmehr im unteren Bereich des Schwerölabschnitts vorgesehenen Einlass der Ölwaschkolonne aufzunehmen und durch die zweiten Stoffaustauschböden im Schwerölabschnitt und sodann durch die zweiten Stoffaustauschböden im Leichtölabschnitt zu führen, wobei die Ölwaschkolonne bevorzugt dazu ausgebildet ist, die zweiten Stoffaustauschböden im Schwerölabschnitt mit einem flüssigen, kohlenwasserstoffhaltigen dritten Waschmittel zu beaufschlagen, um einen Stoffaustausch zwischen dem durch die zweiten Stoffaustauschböden geführten Spaltgastrom und jenem dritten Waschmittel herzustellen, wobei bevorzugt schwerere Kohlenwasserstoffe aus dem Spaltgasstrom abgetrennt werden, die sich im Sumpf der Ölwaschkolonne als Schwerölfraktion sammeln.

Weiterhin ist die Ölwaschkolonne bevorzugt dazu ausgebildet, die zweiten Stoffaustauschböden im Leichtölabschnitt mit einem flüssigen, kohlenwasserstoffhaltigen zweiten Waschmittel zu beaufschlagen, um einen Stoffaustausch zwischen dem durch die zweiten Stoffaustauschböden geführten Spaltgasstrom und jenem zweiten Waschmittel herzustellen. Hierbei werden im Vergleich zum Benzinabschnitt (siehe oben) bevorzugt vorwiegend schwerer-siedende Kohlenwasserstoffe bzw. im Vergleich zum Schwerölabschnitt vorwiegend leichter-siedende Kohlenwasserstoffe aus dem Spaltgasstrom abgetrennt, die sich im Leichtölabschnitt als Leichtölfraktion sammeln. Diesbezüglich ist die Ölwaschkolonne bevorzugt dazu ausgebildet, jene Leichtölfraktion aus dem Leichtölabschnitt abzuziehen (z.B. von einem Kaminboden, der Leichtöl- und Schwerölabschnitt voneinander trennt), abzukühlen und ggf. von Kokspartikeln zu reinigen sowie zumindest teilweise in den Leichtölabschnitt als zweites Waschmittel bzw. Bestandteil des zweiten Waschmittels zurückzuführen (siehe unten).

Weiterhin ist die Ölwaschkolonne bevorzugt dazu ausgebildet, einen Teil der aus dem Benzinabschnitt abgezogenen Benzinfraktion der aus dem Leichtölabschnitt abgezogenen Leichtölfraktion hinzuzugeben und dieses Gemisch als zweites Waschmittel in den Leichtölabschnitt zurückzuführen und dort auf einen obersten zweiten Stoffaustauschboden erneut aufzugeben (analog zum Ölabschnitt ohne Schwerölabschnitt).

Weiterhin ist die Ölwaschkolonne bevorzugt dazu ausgebildet, die im Sumpf der Ölwaschkolonne anfallende Schwerölfraktion abzuziehen und nach Abkühlung und ggf. nach Entfernung von Kokspartikeln zumindest teilweise als drittes Waschmittel in den Schwerölabschnitt zurückzuführen und erneut auf einen obersten zweiten Stoffaustauschboden des Schwerölabschnitts aufzugeben.

In einer Ausführungsform der Erfindung ist vorgesehen, dass die Länge des Benzinabschnitts nicht mehr als die Hälfte des Ölabschnitts, der ggf. einen Leichölsowie einen Schwerölabschnitt aufweisen kann (siehe oben), beträgt. Weiterhin ist gemäß einer Ausführungsform der Erfindung vorgesehen, dass der Benzinabschnitt 6 bis 8, insbesondere 7, erste Stoffaustauschböden aufweist. Vorzugsweise weisen dabei benachbarte erste Stoffaustauschböden einen Abstand zueinander entlang der Längsachse im Bereich von 500mm bis 900mm auf.

Gemäß einer weiteren Ausführungsform ist vorgesehen, dass der Ölabschnitt der Ölwaschkolonne 10 bis 20, insbesondere 16, zweite Stoffaustauschböden aufweist. Für den Fall, dass der besagte Ölabschnitt in den besagten Leichtölabschnitt und jenen Schwerölabschnitt unterteilt ist, ist bevorzugt vorgesehen, dass der Leichtölabschnitt 6 bis 12, insbesondere 8, zweite Stoffaustauschböden aufweist, wohingegen der Schwerölabschnitt vorzugsweise 4 bis 8, insbesondere 8, zweite Stoffaustauschböden aufweist.

Vorzugsweise weisen benachbarte zweite Stoffaustauschböden des zweiten Ölabschnittes bzw. des Leicht- und Schwerölabschnittes der Ölwaschkolonne einen Abstand entlang der Längsachse im Bereich von 600mm bis 900mm auf.

Zum Verteilen des jeweiligen Waschmittels auf die zugeordneten zweiten Stoffaustauschböden weist die Ölwaschkolonne gemäß einer Ausführungsform der Erfindung einen im Ölabschnitt angeordneten ersten Flüssigkeitsverteiler auf, der dazu ausgebildet ist, die zweiten Stoffaustauschböden mit jenem zweiten Waschmittel zu beaufschlagen.

Gemäß einem Ausführungsbeispiel der Erfindung ist der erste Flüssigkeitsverteiler dazu ausgebildet, jenes zweite Waschmittel auf die Kanten der Ablaufelemente eines obersten zweiten Stoffaustauschbodens des Ölabschnitts aufzugeben, so dass jenes zweite Waschmittel zu beiden Seiten der jeweiligen Kante über die Ablaufflächen vom jeweiligen Ablaufelement abfließt.

Für den Fall, dass der Ölabschnitt einen Leichtölabschnitt und einen Schwerölabschnitt aufweist, ist vorgesehen, dass der besagte erste Flüssigkeitsverteiler im Leichtölabschnitt angeordnet ist und jener oberste zweite Stoffaustauschboden des Ölabschnitts ein oberster zweiter Stoffaustauschboden des Leichtölabschnitts ist.

Bevorzugt ist ein zweiter Flüssigkeitsverteiler im Schwerölabschnitt angeordnet, wobei der zweite Flüssigkeitsverteiler vorzugsweise dazu ausgebildet ist, die zweiten Stoffaustauschböden des Schwerölabschnitts mit dem dritten Waschmittel zu beaufschlagen. Der zweite Flüssigkeitsverteiler ist dabei bevorzugt dazu ausgebildet, jenes dritte Waschmittel auf die Kanten der Ablaufelemente eines obersten zweiten Stoffaustauschbodens des Schwerölabschnitts aufzugeben, so dass jenes dritte Waschmittel zu beiden Seiten der jeweiligen Kante über die Ablaufflächen vom jeweiligen Ablaufelement abfließt.

Die zweiten Stoffaustauschböden des Ölabschnitts bzw. des Leichtöl- und Schwerölabschnitts sind vorzugsweise so übereinander angeordnet, dass die Ablaufelemente zweier benachbarter zweiter Stoffaustauschböden versetzt zueinander angeordnet sind, so dass das jeweilige Waschmittel, das von einer Ablauffläche eines oberen Ablaufelementes abfließt, auf eine Ablauffläche eines darunter versetzt angeordneten unteren Ablaufelementes auftrifft (siehe oben). Hierdurch ist mit Vorteil gewährleistet, dass die volle Flüssigkeitsmenge bereits am obersten Stoffaustauschboden zur Verfügung steht, im Gegensatz zu Sprühdüsen, bei denen regelmäßig 30% bis 50% der Flüssigkeit in den Spalten bzw. Durchgangsöffnungen zwischen den Ablaufelementen landet und erst auf tieferen Stoffaustauschböden wirksam wird.

Vorzugsweise ist der erste bzw. der zweite Flüssigkeitsverteiler also dazu ausgebildet, die flüssige Phase bzw. das jeweilige Waschmittel vollständig auf die Ablaufelemente, insbesondere deren Kanten, aufzugeben. Weiterhin ist der Flüssigkeitsaustrag über den Kopf der jeweiligen Kolonne bei versprühtem Waschmittel (kleine Tropfen) unvorteilhafter Weise größer.

Gemäß einer Ausführungsform der Erfindung weist der erste und/oder zweite Flüssigkeitsverteiler eine Mehrzahl an längs erstreckten Endverteilerkanälen auf, die sich jeweils quer zur Längsachse bzw. entlang des Kolonnenquerschnitts sowie quer zu den Ablaufelementen bzw. deren jeweiliger Längserstreckungsrichtung über den im Wesentlichen gesamten Kolonnenquerschnitt erstrecken.

Vorzugsweise weisen die besagten Endverteilerkanäle jeweils einen quer zur Längsachse bzw. entlang des Kolonnenquerschnitts erstreckten Boden und zwei davon abgehende längs erstreckte, einander gegenüber liegende Seitenwände auf, wobei die besagten Seitenwände jeweils einen oberen Rand aufweisen, und wobei die Auslässe in Form von insbesondere rechteckförmigen Ausnehmungen an den beiden oberen Rändern ausgebildet sind. Die Endverteilerkanäle sind des Weiteren stirnseitig bevorzugt je durch eine weitere Seitenwand begrenzt. Die besagten Ausnehmungen oder Ausschnitte an den Rändern der Seitenwände weisen dabei insbesondere jeweils eine Unterkante auf, über die die flüssige Phase bzw. das jeweilige Waschmittel aus dem jeweiligen Endverteilerkanal auf die darunter liegende Kante eines Ablaufelementes strömt, wobei jene Unterkante entlang der Längsachse der Ölwaschkolonne zum jeweiligen Boden des betrachteten Endverteilerkanals beabstandet ist, so dass der jeweilige Endverteilerkanal theoretisch bis hin zu den besagten Unterkanten der Auslässe Verschmutzungen ansammeln kann, wobei der jeweilige Endverteilerkanal dann immer noch die zu verteilende flüssige Phase definiert über die Auslässe bzw. Ausnehmungen auf den zugeordneten zweiten Stoffaustauschboden geben kann.

Weiterhin weist der erste und/oder zweite Flüssigkeitsverteiler zumindest zwei zueinander parallele, entlang der Längsachse des Kolonnenmantels oberhalb der Endverteilerkanäle angeordnete, längserstreckte Vorverteilerkanäle zum Speisen der Endverteilerkanäle mit der flüssigen Phase (Ölfraktion bzw. Leicht- oder Schwerölfraktion) auf, wobei sich die Vorverteilerkanäle insbesondere quer zur Längsachse bzw. entlang des besagten Kolonnenquerschnitts erstrecken. Vorzugsweise verlaufen die Vorverteilerkanäle quer zu den Endverteilerkanälen. Die Vorverteilerkanäle können über zumindest einen Ausgleichskanal strömungstechnisch miteinander verbunden sein, so dass sich ein etwaiger Pegelunterschied der flüssigen Phase in den Vorverteilerkanälen über den mindestens einen Ausgleichskanal ausgleichen kann.

Weiterhin weisen auch die Vorverteilerkanäle vorzugsweise jeweils einen quer zur Längsachse bzw. entlang des Kolonnenquerschnitts erstreckten Boden und zwei davon abgehende, längs erstreckte sowie einander gegenüber liegende Seitenwände auf, und wobei die besagten Seitenwände jeweils einen oberen Rand aufweisen, wobei an jenen Rändern Auslässe in Form von insbesondere rechteckförmigen Ausnehmungen ausgebildet sind, über die die flüssige Phase in jeweils einen zugeordneten Endverteilerkanal einleitbar ist. Vorzugsweise sind jene Auslässe der Vorverteilerkanäle jeweils lotrecht oberhalb eines zugeordneten Endverteilerkanals angeordnet. Auch hier weisen die besagten Ausnehmungen oder Ausschnitte an den Rändern jeweils eine Unterkante auf, über die die flüssige Phase aus dem jeweiligen Vorverteilerkanal in einen darunter liegenden Endverteilerkanal gelangt, wobei jene Unterkante entlang der Längsachse des Kolonnenmantels zum jeweiligen Boden des betrachteten Vorverteilerkanals beabstandet ist, so dass der jeweilige Vorverteilerkanal wiederum bis hin zu den besagten Unterkanten seiner Auslässe Verschmutzungen ansammeln kann und dennoch die zu verteilende flüssige Phase über die Auslässe bzw. Ausnehmungen auf den jeweils zugeordneten Endverteilerkanal geben kann. Des Weiteren sind die Vorverteilerkanäle jeweils stirnseitig durch eine weitere Seitenwand begrenzt.

Vorzugsweise werden die besagten Vorverteilerkanäle über zumindest je ein Einspeiserohr, vorzugsweise über je zwei Einspeiserohre mit der flüssigen Phase, d.h. mit der Ölfraktion bzw.der Leicht- oder der Schwerölfraktion, beschickt, wobei sich jene Einspeiserohre zumindest abschnittsweise entlang der Längsachse des Mantels der Kolonne erstrecken, so dass ein Auslass des jeweiligen Einspeiserohres, über den die flüssige Phase aus dem jeweiligen Einspeiserohr ausgegeben wird, entlang der Längsachse dem jeweiligen Boden des zu versorgenden Vorverteilerkanales zugewandt ist. Die besagten Einspeiserohre sind im Bereich ihres jeweiligen Auslasses vorzugsweise je zwischen zwei parallel zueinander verlaufenden Spritzblechen angeordnet, die jeweils an einer zugeordneten Seitenwand des jeweiligen Vorverteilerkanals festgelegt sind. Weiterhin weisen die Vorverteilerkanäle an den nach außen gewandten Außenseiten ihrer Seitenwände zu beiden Seiten der Auslässe des jeweiligen Vorverteilerkanals je ein Leitblech auf, wobei die Leitbleche vorzugsweise senkrecht von der jeweiligen Seitenwand abstehen und jeweils mit einem unteren freien Endbereich in den unterhalb des jeweiligen Auslasses angeordneten Endverteilerkanal hinein stehen. Die Leitbleche sind dazu ausgebildet, den Strom der flüssigen Phase aus den Auslässen der Vorverteilerkanäle derart zu leiten, dass dieser jeweils möglichst vollständig im zugeordneten Endverteilerkanal landet.

Die Vorverteiler- und Endverteilerkanäle sind also in der vorstehend beschriebenen Ausführungsform vorzugsweise als nach oben hin offene Kanäle konzipiert (nach unten hin werden die Kanäle durch die besagten Böden, zu den Seiten hin durch die besagten Seitenwände sowie die stirnseitigen weiteren Seitenwände begrenzt). Die besagten Kanäle werden daher auch als Vorverteiler- bzw. Endverteilerrinnen bezeichnet.

Weitere Einzelheiten und Vorteile der Erfindung sollen durch die nachfolgenden Figurenbeschreibungen von Ausführungsbeispielen anhand der Figuren erläutert werden.

Es zeigen:
- Fig. 1: eine schematische Schnittansicht einer Ölwaschkolonne aus dem Stand der Technik;
- Fig. 2: eine schematische Schnittansicht einer erfindungsgemäßen Ölwaschkolonne;
- Fig. 3: ein Detail der Figur 2;
- Fig. 4: das Detail IV gemäß Figur 3;
- Fig. 5: eine Draufsicht auf das Detail gemäß Figur 4;
- Fig. 6: eine teilweise geschnittene Ansicht entlang der Linie VI-VI der Figur 5;
- Fig. 7: eine Detailansicht eines Festlagers eines erfindungsgemäßen Ablaufelementes;
- Fig. 8: eine ausschnitthafte Schnittansicht des Details VIII gemäß Figur 3;
- Fig. 9: eine Draufsicht auf einen erfindungsgemäßen Stoffaustauschboden (unterer Teil) sowie auf einen Flüssigkeitsverteiler (oberer Teil) zum Beaufschlagen des Stoffaustauschbodens mit einer flüssigen Phase;
- Fig. 10: eine ausschnitthafte Ansicht entlang der Richtung X der Figur 9 auf einen Ausgleichskanal des Flüssigkeitsverteilers, der zwei Vorverteilerkanäle des Flüssigkeitsverteilers miteinander verbindet;
- Fig. 11: eine ausschnitthafte Ansicht entlang der Richtung XI der Figur 9 auf einen Endverteilerkanal mit Auslässen in Form von rechteckförmigen Ausnehmungen, die entlang eines Randes einer Seitenwand des Endverteilerkanals ausgebildet sind;
- Fig. 12: eine ausschnitthafte Ansicht entlang der Richtung XII der Figur 9 auf einen Vorverteilerkanal mit Auslässen in Form von rechteckförmigen Ausnehmungen, die entlang eines Randes einer Seitenwand des Vorverteilerkanals ausgebildet sind;
- Fig. 13: eine ausschnitthafte, teilweise geschnittene Ansicht eines Einspeiserohres für einen Vorverteilerkanal eines Flüssigkeitsverteilers gemäß Figuren 9 bis 12;
- Fig. 14: eine weitere ausschnitthafte, teilweise geschnittene Ansicht eines Einspeiserohres für einen Vorverteilerkanal eines Flüssigkeitsverteilers gemäß Figuren 9 bis 13;
- Fig. 15 bis 17: schematische Schnittdarstellungen von Sieb, Glocken, bzw. Ventilböden.

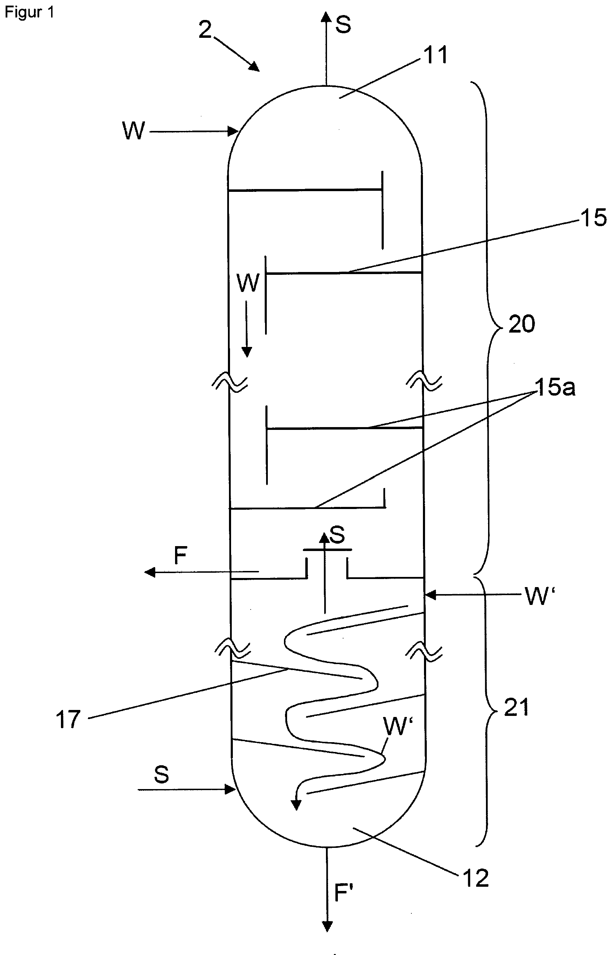

Figur 1 zeigt eine Ölwaschkolonne 2 aus dem Stand der Technik. Die Ölwaschkolonne 2 weist einen oberen Benzinabschnitt 20 und einen unteren Ölabschnitt 21 auf, wobei in einen unteren Bereich des Ölabschnitts 21 ein Spaltgasstrom S eingeleitet wird, der durch Dampfspaltung eines kohlenwasserstoffhaltigen Einsatzes (z.B. Naphtha) erzeugt wurde (siehe oben). Der Spaltgasstrom S wird im Ölabschnitt 21 im Gegenstrom mit einem flüssigen, kohlenwasserstoffhaltigen zweiten Waschmittel W' beaufschlagt, das im Ölabschnitt 21 auf zweite Stoffaustauschböden in Form von einflutigen side-to-side baffles 17 gegeben wird. Hierdurch werden schwerer-siedende Kohlenwasserstoffe aus dem Spaltgasstrom S abgetrennt und sammeln sich im Sumpf 12 als Ölfraktion F'. Im Benzinabschnitt 20 wird der Spaltgasstrom S mittels ersten Stoffaustauschböden in Form von Sieb- oder Ventilböden 15, auf die eine flüssiges, kohlenwasserstoffhaltiges erstes Waschmittel W gegeben wird, mit dem ersten Waschmittel W in Kontakt gebracht, um eine vergleichsweise leichter-siedende Benzinfraktion F aus dem Spaltgasstrom S abzutrennen.

Die erfindungsgemäße Ölwaschkolonne 1 ist nun so konzipiert, dass einer Verschmutzung auf den unteren ersten Stoffaustauschböden 15a der Ölwaschkolonne 2 gemäß Figur 1 entgegen gewirkt wird.

Im Einzelnen weist die erfindungsgemäße Ölwaschkolonne 1 einen im Wesentlichen zylindrischen Mantel 10 auf, der sich entlang einer mit der Vertikalen zusammenfallenden Längsachse L erstreckt und einen Innenraum I der Ölwaschkolonne 1 begrenzt, der entlang der Längsachse L in einen den Kopf 11 der Ölwaschkolonne 1 aufweisenden Benzinabschnitt 20 und einen darunter angeordneten, den Sumpf 12 der Ölwaschkolonne 1 aufweisenden Ölabschnitt 21 unterteilt ist, der wiederum in einen Leichtölabschnitt 21a und einen darunter angeordneten Schwerölabschnitt 21b unterteilt ist. Dabei ist der Benzinabschnitt 20 durch einen Kaminboden 13 vom Ölabschnitt 21 bzw. Leichtölabschnitt 21a getrennt, und der Leichtölabschnitt 21a ist durch einen Kaminboden 14 vom Schwerölabschnitt 21b getrennt.

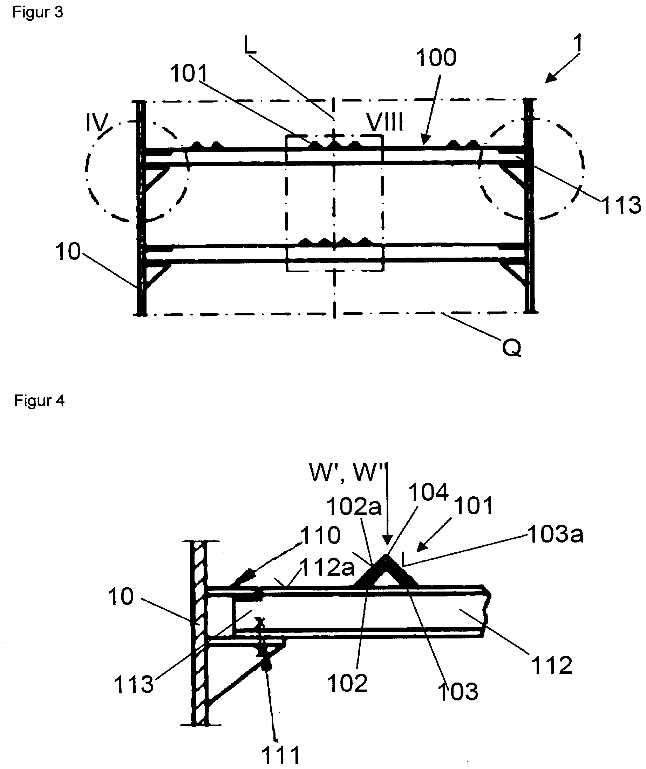

Der vorgekühlte Spaltgasstrom S wird mit einer Temperatur zwischen z.B. ca. 400°C und 600°C der Ölwaschkolonne 1 im Bodenbereich des Schwerölabschnitts 21b zugeführt. Der Schwerölabschnitt 21b der Ölwaschkolonne 1 weist dabei mehrere entlang der Längsachse L übereinander angeordnete zweite Stoffaustauschböden 100 auf, die in den Figuren 3 bis 9 gezeigt sind. Dabei sind - wie vorstehend beschrieben - jeweils benachbarte zweite Stoffaustauschböden 100 so ausgebildet, dass die Ablaufelemente 101 des jeweils unteren zweiten Stoffaustauschbodens 100 mittig unter den Durchgangsöffnungen bzw. Lücken des darüber angeordneten zweiten Stoffaustauschbodens 100 angeordnet sind.

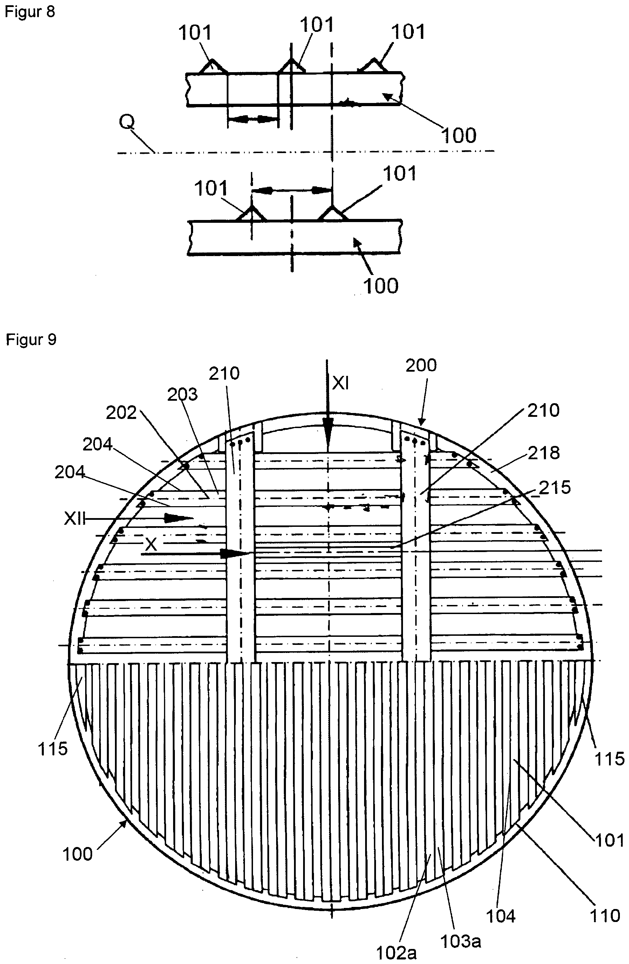

Das Spaltgas S durchströmt den gesamten Innenraum der Ölwaschkolonne 1 von unten nach oben entlang der Längsachse L des Mantels 10 der Kolonne 1, wobei im Schwerölabschnitt 21b ein flüssiges, kohlenwasserstoffhaltiges drittes Waschmittel W" mittels eines in den Figuren 9 bis 14 gezeigten zweiten Flüssigkeitsverteilers 300, der entlang der Längsachse L oberhalb der Stoffaustauschböden 100 angeordnet ist, auf die Stoffaustauschböden 100 aufgegeben wird. Das dritte Waschmittel W" strömt entsprechend im Schwerölabschnitt 21b herab und wird durch die zweiten Stoffaustauschböden 100 in intensiven Kontakt mit dem aufsteigenden Spaltgasstrom S gebracht. Dadurch wird aus dem Spaltgasstrom S der Anteil an den schwersten Kohlenwasserstoffen abgetrennt, wobei sich jene Kohlenwasserstoffe als flüssige Schwerölfraktion F" im Sumpf 12 der Ölwaschkolonne 1 sammeln. Die Schwerölfraktion F" wird von dort abgezogen, gekühlt und als drittes Waschmittel W" zumindest teilweise in den Schwerölabschnitt 21b zurückgeführt und erneut mittels des zweiten Flüssigkeitsverteilers 300 auf einen obersten zweiten Stoffaustauschboden 100 bzw. auf die Spaltgasphase S aufgegeben.

Aus dem Schwerölabschnitt 21b gelangt der an der Schwerölfraktion abgereicherte Spaltgasstrom S über den Kaminboden 14 in den Leichtölabschnitt 21a der Ölwaschkolonne 1. Hier steigt die Spaltgasphase S ebenfalls durch zweite Stoffaustauschböden 100 weiter nach oben auf, die im Gegenstrom über einen ersten Flüssigkeitsverteiler 200 (siehe Figuren 9 bis 14) des Leichtölabschnitts 21a mit einem flüssigen, kohlenwasserstoffhaltigen zweiten Waschmittel W' beaufschlagt werden, so dass sich entsprechende, aus der Gasphase S abgetrennte, leichter-siedende Kohlenwasserstoffe als flüssige Leichtölfraktion im Leichtölabschnitt 21a, insbesondere auf dem Kaminboden 14, sammeln. Von dort aus kann jene Leichtölfraktion ggf. über Abläufe direkt in die Vorverteilerkanäle 210 des zweiten Flüssigkeitsverteilers 300 des Schwerölabschnitts 21b gelangen. Weiterhin wird die besagte Leichtölfraktion F' aus dem Leichtölabschnitt 21a abgezogen, gekühlt und mit einer aus dem Benzinabschnitt 20 abgezogenen Benzinfraktion F vermischt und als zweites Waschmittel W' über den besagten ersten Flüssigkeitsverteiler 200 in den Leichtölabschnitt 21a zurückgeführt.

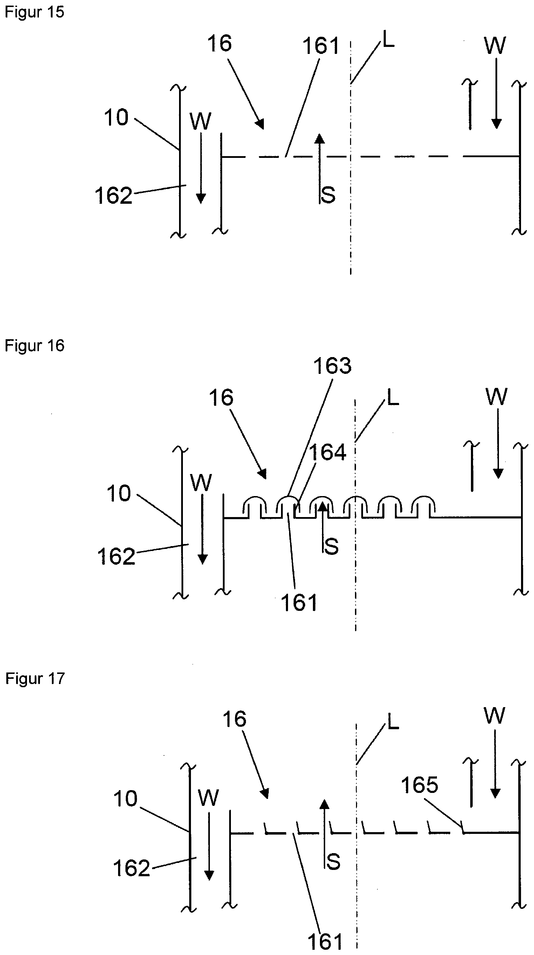

Aus dem Leichtölabschnitt 21a gelangt der an der Leichtölfraktion F' abgereicherte Spaltgasstrom S über den Kaminboden 13 schließlich in den Benzinabschnitt 20 der Ölwaschkolonne 1, wo der Spaltgasstrom S über erste Stoffaustauschböden 16 in Form von Sieb-, Glocken- oder Ventilböden (vgl. Figuren 15 bis 17) in den Kopf 11 der Kolonne 1 gelangt und von dort abgezogen wird. Im Benzinabschnitt 20 wird der Spaltgasstrom S mit einem flüssigen, kohlenwasserstoffhaltigen ersten Waschmittel W in Kontakt gebracht, das auf die ersten Stoffaustauschböden 16 aufgegeben wird, so dass leichter-siedende Kohlenwasserstoffe aus dem Spaltgasstrom S abgetrennt werden und sich im Benzinabschnitt 20 als flüssige Benzinfraktion F sammeln. Die Benzinfraktion F wird aus dem Benzinabschnitt 20 abgezogen und teilweise mit der aus dem Leichtölabschnitt 21a abgezogenen Leichtölfraktion F' gemischt und in den Leichtölabschnitt 21a als zweites Waschmittel W' zurückgeführt (siehe oben). Weiterhin kann ein Teil der Benzinfraktion F auf einen unteren ersten Stoffaustauschboden 16a zurückgeführt werden (z.B. auf den zweiten ersten Stoffaustauschboden 16a von unten), um die Zirkulation auf den unteren ersten Stoffaustauschböden 16a zu erhöhen, was einer Verlegung der unteren ersten Stoffaustauschböden 16a durch Polymerbildung entgegenwirkt (siehe oben).

Bevorzugt weist der Benzinabschnitt 20 der Ölwaschkolonne 1 entlang der Längsachse L eine Länge A auf, die kleiner ist als die Länge A' des Ölabschnitts 21, vorzugsweise kleiner als die Hälfte der Länge A' des Ölabschnitts 21.

Für den Fall, dass das Spaltgas S durch Spaltung eines Einsatzes wie Naphtha oder eines leichteren Einsatzes erzeugt wird, kann der Schwerölabschnitt 21b entfallen. Aus dem Sumpf 12 des Ölabschnitts 21 wird dann eine Ölfraktion F' abgezogen, die analog zur Leichtölfraktion F' im obigen Ausführungsbeispiel behandelt wird.

Die Figuren 3 bis 9 zeigen die zweiten Stoffaustauschböden 100 im Detail. Allgemein können derartige Stoffaustauschböden 100 überall dort in Kolonnen mit Vorteil eingesetzt werden, wo aufgrund der in Stoffaustausch zu bringenden gasförmigen bzw. flüssigen Phasen ein hohes Verschmutzungsrisiko herrscht.

Die zweiten Stoffaustauschböden 100 weisen gemäß Figur 9 eine Mehrzahl an längs erstreckten, parallel zueinander orientierten Ablaufelementen 101 auf, die sich parallel zum senkrecht zur Längsachse L verlaufenden Kolonnenquerschnitt Q auf gleicher Höhe (bezogen auf die Längsachse L des Mantels 10) erstrecken. Benachbarte Ablaufelemente 101 sind dabei quer zu ihrer Längserstreckungsrichtung äquidistant zueinander beabstandet, so dass zwischen je zwei Ablaufelementen 101 eine Durchgangsöffnung oder Lücke gebildet wird, durch die gasförmige Phase S im Innenraum der Ölwaschkolonne 1 aufsteigen kann.

Die Ablaufelemente 101 weisen gemäß den Figuren 4 bis 7 und 9 jeweils einen ersten und einen zweiten Schenkel 102, 103 auf, die winklig miteinander unter Ausbildung einer Kante 104 verbunden sind, so dass die Ablaufelemente 101 geichschenklige Winkelprofile 101 bilden. Dabei sind die jeweiligen Kanten 104 der Ablaufelemente 101 ebenfalls längs erstreckt ausgebildet und verlaufen parallel zum Kolonnenquerschnitt Q. Weiterhin laufen die Schenkel 102, 103 der Ablaufelementes 101 entlang der Längsachse L nach oben hin aufeinander zu, so dass die beiden Schenkel 102, 103 eines Ablaufelementes 101 je eine nach oben gewandte Ablauffläche 102a, 103a definieren, die jeweils ausgehend von der Kante 104 des jeweiligen Ablaufelementes 101 nach unten hin abfallen. Wird entsprechend das jeweilige flüssige Waschmittel W', W" durch einen ersten oder zweiten Flüssigkeitsverteiler 200, 300 auf die jeweilige Kante 104 eines Ablaufelementes 101 aufgegeben, fließt dieses zu beiden Seiten der jeweiligen Kante 104 über die Ablaufflächen 102a, 103a nach unten ab, so dass je zwei Vorhänge des betreffenden Waschmittels W', W" gebildet werden.

Gemäß Figur 8 sind mehrere erfindungsgemäße zweite Stoffaustauschböden 100 entlang der Längsachse L übereinander angeordnet, wobei die Ablaufelemente 101 benachbarter zweiter Stoffaustauschböden 100 entlang des Kolonnenquerschnitts Q versetzt zueinander angeordnet sind, so dass die von den Ablaufflächen 102a, 103a des jeweiligen Ablaufelementes 101 eines zweiten Stoffaustauschbodens 100 ablaufende flüssige Phase W', W" auf zwei unterhalb jenes Ablaufelementes 101 angeordnete Ablaufelemente 101 eines darunter liegenden zweiten Stoffaustauschbodens 100 aufgeben wird. Dabei sind die Ablaufelemente 101 des jeweils unteren zweiten Stoffaustauschbodens 100 entlang des Kolonnenquerschnitts Q bevorzugt jeweils mittig zwischen zwei Ablaufelementen 101 des darüber befindlichen zweiten Stoffaustauschbodens 100 angeordnet. Die erfindungsgemäßen zweiten Stoffaustauschböden 100 werden daher auch Kaskadenböden genannt.

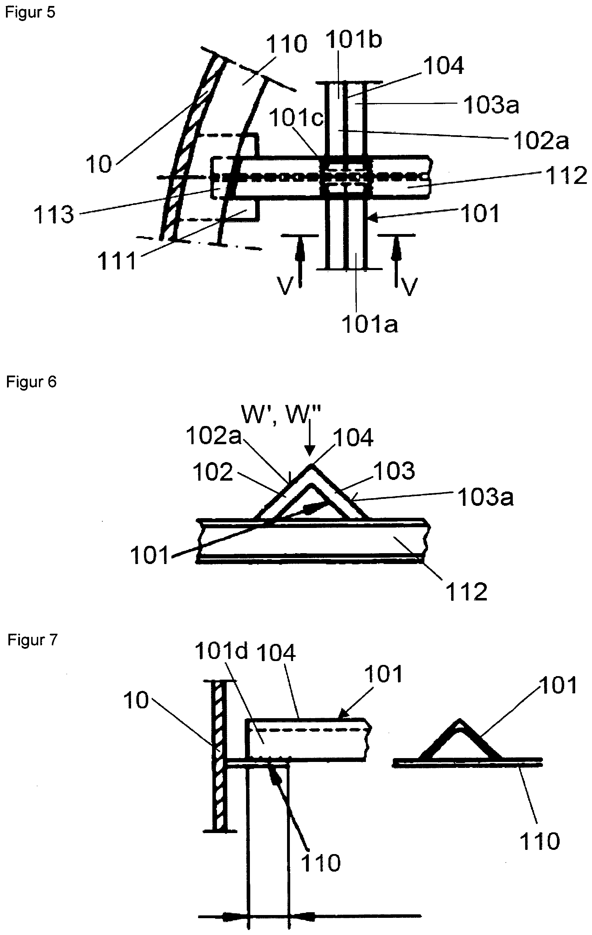

Gemäß den Figuren 4-7 liegen die Ablaufelemente 101 eines zweiten Stoffaustauschbodens 100 mit einander gegenüberliegenden Endbereichen 101d (vgl. Fig. 7) auf einem zugeordneten, umlaufenden Tragring 110 auf, der an einer Innenseite des Mantels 10 der Ölwaschkolonne 1 festgelegt ist. Dabei ist jeweils ein Endbereich 101d über ein Festlager, der andere über ein Gleitlager auf dem Tragring 110 gelagert.

Die Ablaufelemente 101 können sich durchgehend über den Kolonnenquerschnitt Q von einem Innenseitenbereich des Mantels 10 der Ölwaschkolonne 1 zu einem gegenüberliegenden Innenseitenbereich des Mantels 10 der Ölwaschkolonne 1 erstrecken. Es besteht aber auch die Möglichkeit, dass ein Ablaufelement 101 aus mehreren Segmenten 101a, 101b besteht (vgl. Fig. 5), die entlang der Längserstreckungsrichtung des Ablaufelementes 101 hintereinander angeordnet sind. Dabei können Spalte zwischen zwei benachbarten Segmenten 101a, 101b mit einer Kappe 101c überdeckt sein. Derartige Segmente 101a, 101b liegen dann mit ihren freien Endbereichen auf dem Tragring 110 und/oder auf einem Träger 112, insbesondere Profilträger 112, auf, der sich quer zu den Ablaufelementen 101 erstreckt. Ggf. können mehrere derartige Träger 112 vorgesehen werden, die dann parallel zu einander verlaufen. Ein Endbereich eines Segmentes 101a, 101b ist dann über ein Festlager auf dem Tragring 110 oder einem Träger 112 gelagert, der jeweils andere Endbereich über ein Gleitlager.

Die Träger 112, sofern vorhanden, untergreifen den Tragring 110 mit je einem freien Endbereich 113, der auf einem unterhalb des jeweiligen Tragrings110 an der Innenseite des Mantels 10 festgelegten Lager 111 aufliegt. Die Endbereiche 113 des jeweiligen Trägers 112 weisen dabei eine Ausnehmung zur Aufnahme des zugeordneten Tragrings 110 auf, so dass der jeweilige Tragring 110 zusammen mit dem jeweiligen Träger 112 eine im Wesentliche stufenlose Oberfläche 112a ausbildet, auf der die Ablaufelemente 101 aufliegen können (vgl. Fig. 4). Bei den Trägern 112 ist jeweils ebenfalls bevorzugt ein Endbereich 113 über ein Lager 111 in Form eines Gleitlagers 111 (vgl. Fig. 4) am Mantel 10 gelagert, wohingegen der andere Endbereich 113 über ein Festlager gelagert ist (vgl. Fig. 3).

Weiterhin können die zweiten Stoffaustauschböden 100 gemäß Figur 9 jeweils seitlich eines äußersten Ablaufelementes 101 ein Abdeckelement 115 aufweisen, das dazu dient, die Durchgangsöffnung zwischen dem besagten Ablaufelement 101 und dem Abdeckelement 115 auf die vorgesehene Breite zu begrenzen.

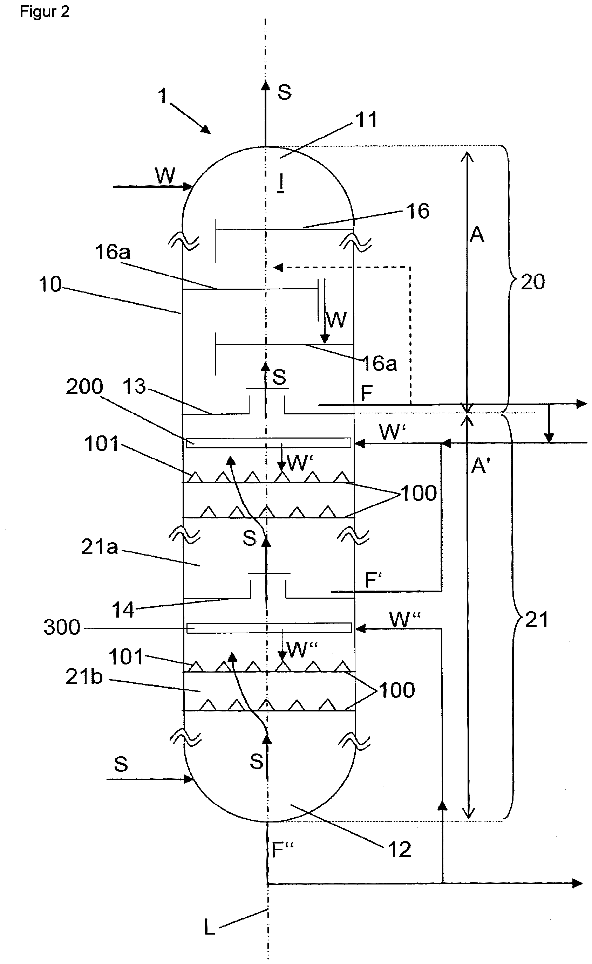

Zum Beaufschlagen der übereinander angeordneten zweiten Stoffaustauschböden 100 mit dem jeweiligen flüssigen Waschmittel W', W" ist gemäß den Figuren 2 sowie 9-14 ein erster bzw. zweiter Flüssigkeitsverteiler 200, 300 vorgesehen. Diese weisen jeweils mehrere nach oben hin offene, im Querschnitt kastenförmige Endverteilerkanäle 202 auf, die entlang der Längsachse L der Ölwaschkolonne 1 oberhalb der jeweils zugeordneten zweiten Stoffaustauschböden 100 angeordnet sind und sich jeweils entlang des besagten Kolonnenquerschnitts Q sowie quer zu den Ablaufelementen 101 erstrecken.

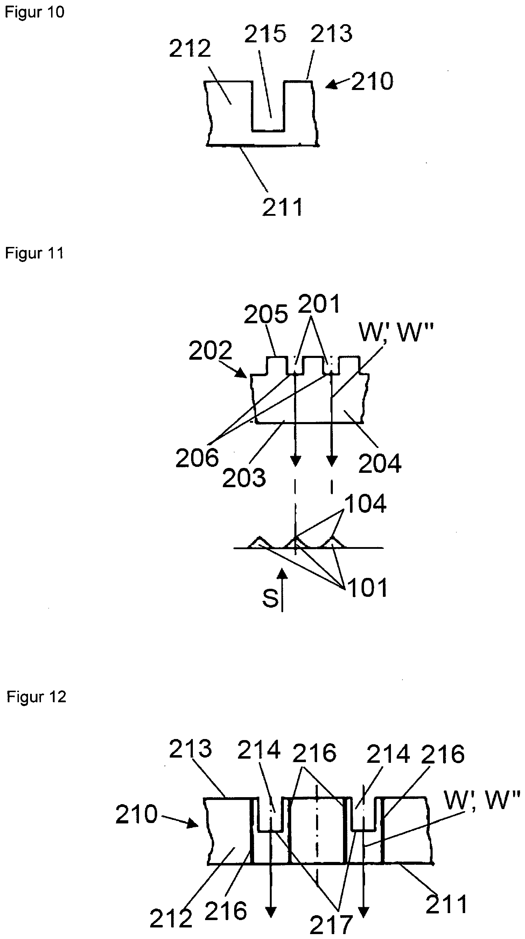

Die längs erstreckten Endverteilerkanäle 202 weisen jeweils einen parallel zum Kolonnenquerschnitt Q erstreckten Boden 203 auf sowie zwei davon abgehende Seitenwände 204, wobei die besagten Seitenwände 204 jeweils einen oberen Rand 205 aufweisen (vgl. Fig. 11), an dem entlang Auslässe 201 in Form von rechteckförmigen Ausnehmungen ausgebildet sind, die entlang der Längsachse L der jeweiligen Kolonne 1 jeweils lotrecht oberhalb einer Kante 104 eines dem jeweiligen Auslass 201 zugeordneten Ablaufelementes 101 angeordnet sind. Die Endverteilerkanäle 202 werden zum Verteilen der flüssigen Phase W', W" auf die Ablaufelemente 101 nun so mit der flüssigen Phase W', W" beschickt, das diese über die parallel zum jeweiligen Boden 203 verlaufenden Unterkanten 206 der einzelnen Auslässe 201 tritt und auf die besagten Kanten 104 herabfällt und durch die kaskadierten Ablaufelemente 101 (vgl. Fig. 8) weiter nach unten verteilt wird, so dass sich eine Vielzahl an Vorhängen der flüssigen Phase W', W" bilden, durch die eine zu behandelnde gasförmige Phase (z.B. Spaltgas) S im Gegenstrom zwangsgeführt wird, so dass sich ein intensiver Stoff- und/oder Energieaustausch zwischen den Phasen W', W", S ereignet.

Zum Beschicken der Endverteilerkanäle 202 mit der flüssigen Phase W', W" sind gemäß Figur 10 zwei zueinander parallele, entlang der Längsachse L oberhalb der Endverteilerkanäle 202 angeordnete Vorverteilerkanäle 210 vorgesehen, die ebenfalls nach oben hin offen ausgebildet sind und im Querschnitt kastenförmig ausgeformt sind. Die Vorverteilerkanäle 210 erstrecken sich ebenfalls entlang des Kolonnenquerschnitts Q, und zwar vorzugsweise ebenso wie die Endverteilerkanäle 202 im Wesentlichen über den gesamten Kolonnenquerschnitt, d.h., von einem Innenseitenbereich des Mantels 10 der jeweiligen Kolonne 1 hin zu einem gegenüberliegenden Innenseitenbereich des Mantels 10. Des Weiteren erstrecken sich die Vorverteilerkanäle 210 quer zu den Endverteilerkanälen 202.

Die Vorverteilerkanäle 210 weisen ebenfalls jeweils einen parallel zum Kolonnenquerschnitt Q erstreckten Boden 211 auf sowie zwei davon abgehende Seitenwände 212, die jeweils einen oberen Rand 213 aufweisen, an denen Auslässe 214 in Form von rechteckförmigen Ausnehmungen ausgebildet sind, über die die flüssige Phase W', W" in jeweils einen zugeordneten Endverteilerkanal 202 einleitbar ist. Hierzu sind die Auslässe 214 der Vorverteilerkanäle 210 wiederum jeweils lotrecht entlang der Längsachse L des Mantels 10 der jeweiligen Kolonne 1 oberhalb eines zugeordneten Endverteilerkanals 202 angeordnet (vgl. Figuren 12, 13 und 14).

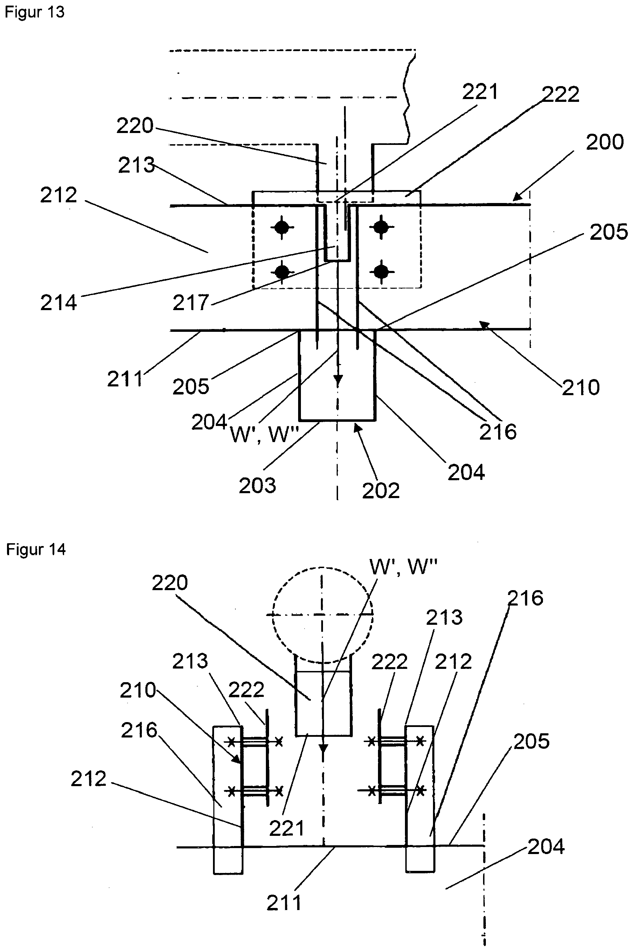

Die besagten Vorverteilerkanäle 210 werden gemäß Figuren 13 und 14 ihrerseits über zumindest je ein Einspeiserohr 220, vorzugsweise über je zwei Einspeiserohre 220, mit der flüssigen Phase F beschickt, die sich zumindest abschnittsweise entlang der Längsachse L des Mantels 10 der jeweiligen Kolonne 1 erstrecken, wobei ein Auslass 221 des jeweiligen Einspeiserohres 220, über den die flüssige Phase W', W" aus dem jeweiligen Einspeiserohr 220 in den zugeordneten Vorverteilerkanal 210 strömt, entlang der besagten Längsachse L dem jeweiligen Boden 211 des zu versorgenden Vorverteilerkanales 210 zugewandt ist. Die besagten Einspeiserohre 220 sind je zwischen zwei parallel zueinander verlaufenden Spritzblechen 222 angeordnet, die den Auslass 221 des jeweiligen Einspeiserohres 220 beidseitig flankieren und jeweils an einer zugeordneten Seitenwand 212 des betreffenden Vorverteilerkanals 210 festgelegt sind.

Weiterhin weisen die Vorverteilerkanäle 210 an den nach außen gewandten Außenseiten ihrer Seitenwände 212 zu beiden Seiten der Auslässe 214 des jeweiligen Vorverteilerkanals 210 je ein Leitblech 216 auf, die senkrecht von der jeweiligen Seitenwand 212 abstehen und jeweils mit einem unteren freien Endbereich in den unterhalb des jeweiligen Auslasses 214 angeordneten Endverteilerkanal 202 hinein ragen. Die Leitbleche 216 dienen dazu, den Strom der flüssigen Phase W, W" aus den Auslässen 214 der Vorverteilerkanäle 210 in die zugeordneten Endverteilerkanäle 202 zu leiten.

Damit die flüssige Phase W, W" in den beiden Vorverteilerkanälen 210 immer den gleichen Pegel aufweist, können die beiden Vorverteilerkanäle 210 gemäß Figuren 9 und 10 über zumindest einen Ausgleichskanal 215 verbunden sein, der sich zwischen den beiden Vorverteilerkanälen 210 erstreckt, und zwar quer zu diesen.

Die oben erwähnten ersten Stoffaustauschböden 16 (bzw. 16a) des Benzinabschnitts 20 der Ölwaschkolonne 1 sind in den Figuren 15 bis 17 schematisch im Schnitt gezeigt. Dabei handelt es sich gemäß Figur 15 bei Siebböden 16 um Kolonnenböden mit einem Ablaufschacht 162, über den das Waschmittel W auf darunter befindliche Kolonnenböden gelangt. Siebböden weisen dabei eine Mehrzahl an Durchgangsöffnungen 161 auf, durch die das Spaltgas S strömt und das auf dem jeweiligen Siebboden 16 befindliche Waschmittel W kontaktiert.

Bei ersten Stoffaustauschböden in Form von Glockenböden 16 ist gemäß Figur 16 ebenfalls ein Ablaufschacht 162 vorgesehen. Weiterhin sind bei Glockenböden 16 die besagten Durchgangsöffnungen 161 von Kaminhälsen 164 eingefasst, die von Hauben 163 überdacht sind, wobei insbesondere die Kaminhälse 164 in die jeweils zugeordnete Haube 163 hinein ragen.

Ventilböden 16 können gemäß Figur 17 ebenfalls einen Ablaufschacht 162 aufweisen. Des Weiteren sind bei Ventilböden 16 die besagten Durchgangsöffnungen 161 durch Ventile 165, insbesondere Klappen, verschließbar, um ein Durchregnen zu verhindern. Bei hinreichendem Spaltgasdruck werden die Ventile aufgedrückt, so dass das Spaltgas S von unten nach oben durch die Durchgangsöffnungen 161 des Ventilbodens strömen kann. Neben beweglichen Ventilen können auch sogenannte Fixed Valves, d.h., feststehende Ventildeckel mit Promotoreneffekt, verwendet werden

**Bezugszeichenliste**

| | |
|---|---|
| 1 | Ölwaschkolonne |
| 2 | Ölwaschkolonne |
| 10 | Mantel |
| 11 | Kopf |
| 12 | Sumpf |
| 13, 14 | Kaminboden |
| 15, 15a | Sieb oder Ventilböden |
| 16, 16a | Erste Stoffaustauschböden, z.B. Sieb-, Glocken- oder Ventilböden |
| 17 | Side-to-side baffels |
| 20, 21, 21a, 21b | Abschnitte der Kolonne |
| 100 | Zweite Stoffaustauschböden |
| 101 | Ablaufelement |
| 101a, 101b | Segmente |
| 101c | Kappe |
| 101d | Endbereich |
| 102, 103 | Schenkel |
| 102a, 103a | Ablaufflächen |
| 104 | Kante |
| 110 | Tragring |
| 111 | Lager |
| 112 | Träger |
| 112a | Oberfläche |
| 113 | Endbereich |
| 115 | Abdeckblech |
| 161 | Durchgangsöffnung |
| 162 | Ablaufschacht |
| 163 | Haube |
| 164 | Kaminhals |
| 165 | Ventil (insbesondere Klappe) |
| 200, 300 | Flüssigkeitsverteiler |
| 201 | Auslässe |
| 202 | Endverteilerkanal |
| 203 | Boden |
| 204 | Seitenwand |
| 205 | Rand |
| 206 | Unterkante |
| 210 | Vorverteilerkanal |
| 211 | Boden |
| 212 | Seitenwand |
| 213 | Rand |
| 214 | Auslass |
| 215 | Ausgleichskanal |
| 216 | Leitblech |
| 217 | Unterkante |
| 220 | Einspeiserohr |
| 221 | Auslass |
| 222 | Spritzblech |
| F, F', F" | Fraktionen |
| L | Längsachse |
| Q | Kolonnenquerschnitt |
| S | Spaltgasstrom |
| W, W', W" | Waschmittel |
| I | Innenraum |

## Patentansprüche

1. Ölwaschkolonne, mit einem entlang einer Längsachse (L) erstreckten Mantel (10), der einen Innenraum (I) der Kolonne (1) umschließt, wobei der Innenraum (I) in einen Benzinabschnitt (20) und einen entlang der Längsachse (L) darunter angeordneten Ölabschnitt (21) unterteilt ist, der insbesondere mittels eines Kaminbodens (13) vom Benzinabschnitt (20) abgetrennt ist, wobei im Benzinabschnitt (20) mehrere erste Stoffaustauschböden (16, 16a) und im Ölabschnitt (21) mehrere zweite Stoffaustauschböden (100) angeordnet sind, wobei die Ölwaschkolonne (1) dazu ausgebildet ist, einen Spaltgasstrom (S) durch die zweiten Stoffaustauschböden (100) des Ölabschnitts (21) und sodann durch die ersten Stoffaustauschböden (16, 16a) des Benzinabschnitt (20) zu führen, wobei die Ölwaschkolonne (1) dazu ausgebildet ist, die zweiten Austauschböden (100) im Ölabschnitt (21) mit einem flüssigen, kohlenwasserstoffhaltigen zweiten Waschmittel (W') zu beaufschlagen, um aus dem Spaltgasstrom (S) eine Ölfraktion (F') abzutrennen, und wobei die Ölwaschkolonne (1) dazu ausgebildet ist, die ersten Stoffaustauschböden (16, 16a) im Benzinabschnitt (20) mit einem flüssigen, kohlenwasserstoffhaltigen ersten Waschmittel (W) zu beaufschlagen, um aus dem Spaltgasstrom (S) eine Benzinfraktion (F) abzutrennen,
**dadurch gekennzeichnet,**
**dass** die zweiten Stoffaustauschböden (100) jeweils eine Mehrzahl an parallel und beabstandet zueinander verlaufenden Ablaufelementen (101), insbesondere in Form von Winkelprofilen, aufweisen, wobei die Ablaufelemente (101) jeweils eine erste und eine zweite Ablauffläche (102a, 103a) aufweisen, wobei die beiden Ablaufflächen (102a, 103a) entlang der Längsachse (L) zum Benzinabschnitt (20) hin aufeinander zu laufen und unter Ausbildung einer quer zur Längsachse (L) erstreckten Kante (104) aufeinandertreffen, so dass auf die Kanten (104) der Ablaufelemente (101) aufgegebenes zweites Waschmittel (W') zu beiden Seiten der jeweiligen Kante (104) über die Ablaufflächen (102a, 103a) vom jeweiligen Ablaufelement (101) abfließt, und wobei im Ölabschnitt (21) die Anzahl an zweiten Stoffaustauschböden (100) größer ist als die Anzahl an ersten Stoffaustauschböden (16) im Benzinabschnitt (20), und wobei der Benzinabschnitt (20) entlang der Längsachse (L) eine geringere Länge (A) aufweist als der Ölabschnitt (21), und wobei die ersten Stoffaustauschböden (16) als Siebböden, Glockenböden und/oder Ventilböden ausgebildet sind.

2. Ölwaschkolonne nach Anspruch 1, **dadurch gekennzeichnet, dass** die Länge (A) des Benzinabschnitts (20) nicht mehr als die Hälfte der Länge (A') des Ölabschnitts (21) beträgt.

3. Ölwaschkolonne nach Anspruch 1 oder 2, **dadurch gekennzeichnet, dass** der Benzinabschnitt (20) 6 bis 8, insbesondere 7, erste Stoffaustauschböden (16) aufweist.

4. Ölwaschkolonne nach einem der vorhergehenden Ansprüche, **dadurch gekennzeichnet, dass** der Ölabschnitt (21) in einen Leichtölabschnitt (21a) und einen entlang der Längsachse (L) darunter angeordneten Schwerölabschnitt (21b) unterteilt ist, in denen jeweils mehrere zweite Stoffaustauschböden (100) angeordnet sind, wobei insbesondere der Leichtölabschnitt (21a) vom Schwerölabschnitt (21b) mittels eines Kaminbodens (14) abgetrennt ist, und wobei die Ölwaschkolonne (1) dazu ausgebildet ist, den Spaltgasstrom (S) durch die zweiten Stoffaustauschböden (100) des Schwerölabschnitts (21b) und sodann durch die zweiten Stoffaustauschböden (100) des Leichtölabschnitts (21a) zu führen, wobei die Ölwaschkolonne (1) dazu ausgebildet ist, die zweiten Austauschböden (100) im Schwerölabschnitt (21b) mit einem flüssigen, kohlenwasserstoffhaltigen dritten Waschmittel (W") zu beaufschlagen, um aus dem Spaltgasstrom (S) eine Schwerölfraktion (F") abzutrennen, und wobei die Ölwaschkolonne (1) dazu ausgebildet ist, die zweiten Austauschböden (100) im Leichtölabschnitt (21a) mit einem flüssigen, kohlenwasserstoffhaltigen zweiten Waschmittel (W') zu beaufschlagen, um aus dem Spaltgasstrom (S) eine Leichtölfraktion (F') abzutrennen.

5. Ölwaschkolonne nach einem der vorhergehenden Ansprüche, **dadurch gekennzeichnet, dass** der Ölabschnitt (21) 10 bis 20, insbesondere 16, zweite Stoffaustauschböden (100) aufweist.

6. Ölwaschkolonne nach Anspruch 4, **dadurch gekennzeichnet, dass** der Leichtölabschnitt (21a) 6 bis 12, insbesondere 8, zweite Stoffaustauschböden (100) aufweist,

7. Ölwaschkolonne nach Anspruch 4 oder 6, **dadurch gekennzeichnet, dass** der Schwerölabschnitt (21b) 4 bis 8, insbesondere 8, zweite Stoffaustauschböden (100) aufweist.

8. Ölwaschkolonne nach einem der vorhergehenden Ansprüche, **dadurch gekennzeichnet, dass** die Ölwaschkolonne (1) einen im Ölabschnitt (21) angeordneten ersten Flüssigkeitsverteiler (200) aufweist, der dazu ausgebildet ist, die zweiten Stoffaustauschböden (100) mit dem zweiten Waschmittel (W') zu beaufschlagen, wobei der erste Flüssigkeitsverteiler (200) dazu ausgebildet ist, jenes zweite Waschmittel (W') auf die Kanten (104) der Ablaufelemente (101) eines obersten zweiten Stoffaustauschbodens (100) des Ölabschnitts (21) aufzugeben, so dass jenes zweite Waschmittel (W') zu beiden Seiten der jeweiligen Kante (104) über die Ablaufflächen (102a, 103a) vom jeweiligen Ablaufelement (101) abfließt, wobei insbesondere der erste Flüssigkeitsverteiler (200) im Leichtölabschnitt (21a) angeordnet ist und jener oberste zweite Stoffaustauschboden (100) ein oberster zweiter Stoffaustauschboden (100) des Leichtölabschnitts (21a) ist, und wobei insbesondere ein zweiter Flüssigkeitsverteiler (300) im Schwerölabschnitt (21b) angeordnet ist, wobei insbesondere der zweite Flüssigkeitsverteiler (300) dazu ausgebildet ist, die zweiten Stoffaustauschböden (100) des Schwerölabschnitts (21b) mit jenem dritten Waschmittel (W") zu beaufschlagen, und wobei insbesondere der zweite Flüssigkeitsverteiler (300) dazu ausgebildet ist, jenes dritte Waschmittel (W") auf die Kanten (104) der Ablaufelemente (101) eines obersten zweiten Stoffaustauschbodens (100) des Schwerölabschnitts (21b) aufzugeben, so dass jenes dritte Waschmittel (W") zu beiden Seiten der jeweiligen Kante (104) über die Ablaufflächen (102a, 103a) vom jeweiligen Ablaufelement (101) abfließt.

9. Kolonne nach Anspruch 8, **dadurch gekennzeichnet, dass** der erste und/oder der zweite Flüssigkeitsverteiler (200, 300) jeweils eine Mehrzahl an Auslässen (201) aufweisen, durch die hindurch das jeweilige Waschmittel (W', W") auf die Kanten (104) der Ablaufelemente (101) des jeweiligen obersten zweiten Stoffaustauschbodens (100) aufgebbar ist, wobei die Auslässe (201) jeweils lotrecht oberhalb einer Kante (104) eines zugeordneten Ablaufelementes (101) angeordnet sind.

10. Kolonne nach Anspruch 8 oder 9, **dadurch gekennzeichnet, dass** der erste und/oder der zweite Flüssigkeitsverteiler (200, 300) jeweils eine Mehrzahl an Endverteilerkanälen (202) aufweisen, die sich jeweils entlang des besagten Kolonnenquerschnitts (Q) sowie quer zu den Ablaufelementen (101) erstrecken.

11. Kolonne nach Anspruch 10, **dadurch gekennzeichnet, dass** die Endverteilerkanäle (202) jeweils einen quer zur Längsachse (L) erstreckten Boden (203) und zwei davon abgehende Seitenwände (204) aufweisen, wobei die besagten Seitenwände (204) jeweils einen oberen Rand (205) aufweisen, und wobei die Auslässe (201) in Form von insbesondere rechteckförmigen Ausnehmungen an den beiden oberen Rändern (205) ausgebildet sind.

12. Kolonne nach Anspruch 11, **dadurch gekennzeichnet, dass** der erste und/oder der zweite Flüssigkeitsverteiler (200, 300) zumindest zwei zueinander parallele, entlang der Längsachse (L) oberhalb der Endverteilerkanäle (202) angeordnete Vorverteilerkanäle (210) zum Speisen der Endverteilerkanäle (202) mit dem jeweiligen Waschmittel (W', W") aufweisen, wobei sich die Vorverteilerkanäle (210) insbesondere entlang des Kolonnenquerschnitts (Q) erstrecken, und wobei insbesondere die Vorverteilerkanäle (210) quer zu den Endverteilerkanälen (202) verlaufen.

13. Kolonne nach Anspruch 12, **dadurch gekennzeichnet, dass** die Vorverteilerkanäle (210) jeweils einen quer zur Längsachse (L) erstreckten Boden (211) und zwei davon abgehende Seitenwände (212) aufweisen, wobei die besagten Seitenwände (212) jeweils einen oberen Rand (213) aufweisen, an denen Auslässe (214) in Form von insbesondere rechteckförmigen Ausnehmungen ausgebildet sind, über die das jeweilige Waschmittel (W', W") in jeweils einen zugeordneten Endverteilerkanal (202) einleitbar ist, wobei insbesondere jene Auslässe (214) der Vorverteilerkanäle (210) jeweils lotrecht oberhalb eines zugeordneten Endverteilerkanals (202) angeordnet sind.

14. Kolonne nach Anspruch 12 oder 13, **dadurch gekennzeichnet, dass** die Vorverteilerkanäle (210) über zumindest einen Ausgleichskanal (215) miteinander verbunden sind.

## Claims

1. Oil scrub column having a shell (10) which is extended along a longitudinal axis (L) and encloses an interior (I) of the column (1), the interior (I) being subdivided into a petroleum spirit section (20) and into an oil section (21), which is arranged below section (20) along the longitudinal axis (L) and which is separated from the petroleum spirit section (20) in particular by means of a chimney tray (13), there being arranged in the petroleum spirit section (20) a plurality of first mass transfer trays (16, 16a) and in the oil section (21) a plurality of second mass transfer trays (100), where the oil scrub column (1) is designed to guide a cracking gas stream (S) through the second mass transfer trays (100) of the oil section (21) and subsequently through the first mass transfer trays (16, 16a) of the petroleum spirit section (20), where the oil scrub column (1) is designed to subject the second transfer trays (100) in the oil section (21) to a liquid, hydrocarbon-containing second scrubbing medium (W'), in order to separate out an oil fraction (F') from the cracking gas stream (S), and where the oil scrub column (1) is designed to subject the first mass transfer trays (16, 16a) in the petroleum spirit section (20) to a liquid, hydrocarbon-containing first scrubbing medium (W), in order to separate out a petroleum spirit fraction (F) from the cracking gas stream (S),
**characterized**
**in that** the second mass transfer trays (100) each have a plurality of runoff elements (101) extending parallel to and at a distance from one another, more particularly in the form of angular profiles, where the runoff elements (101) each have first and second runoff surfaces (102a, 103a), where the two runoff surfaces (102a, 103a) converge along the longitudinal axis (L) towards the petroleum spirit section (20) and meet, and in so doing form an edge (104) extending transversely to the longitudinal axis (L), so that second scrubbing medium (W') introduced onto the edges (104) of the runoff elements (101) flows off from the respective runoff element (101) via the runoff surfaces (102a, 103a) at both sides of the respective edge (104), and where the number of second mass transfer trays (100) in the oil section (21) is greater than the number of first mass transfer trays (16) in the petroleum spirit section (20), and where the petroleum spirit section (20) has a lower length (A) along the longitudinal axis (L) than does the oil section (21), and where the first mass transfer trays (16) are designed as sieve trays, bubble trays and/or valve trays.

2. Oil scrub column according to Claim 1, **characterized in that** the length (A) of the petroleum sprit section (20) is not more than half the length (A') of the oil section (21).

3. Oil scrub column according to Claim 1 or 2, **characterized in that** the petroleum spirit section (20) has 6 to 8, more particularly 7, first mass transfer trays (16).

4. Oil scrub column according to any of the preceding claims, **characterized in that** the oil section (21) is subdivided into a light oil section (21a) and into a heavy oil section (21b), which is arranged below section (21a) along the longitudinal axis (L), there being arranged in each of these sections a plurality of second mass transfer trays (100), where in particular the light oil section (21a) is separated from the heavy oil section (21b) by means of a chimney tray (14), and where the oil scrub column (1) is designed to guide the cracking gas stream (S) through the second mass transfer trays (100) of the heavy oil section (21b) and subsequently through the second mass transfer trays (100) of the light oil section (21a), where the oil scrub column (1) is designed to subject the second mass transfer trays (100) in the heavy oil section (21b) to a liquid, hydrocarbon-containing third scrubbing medium (W"), in order to separate out a heavy oil fraction (F") from the cracking gas stream (S), and where the oil scrub column (1) is designed to subject the second transfer trays (100) in the light oil section (21a) to a liquid, hydrocarbon-containing second scrubbing medium (W'), in order to separate out a light oil fraction (F') from the cracking gas stream (S).

5. Oil scrub column according to any of the preceding claims, **characterized in that** the oil section (21) has 10 to 20, more particularly 16, second mass transfer trays (100).

6. Oil scrub column according to Claim 4, **characterized in that** the light oil section (21a) has 6 to 12, more particularly 8, second mass transfer trays (100).

7. Oil scrub column according to Claim 4 or 6, **characterized in that** the heavy oil section (21b) has 4 to 8, more particularly 8, second mass transfer trays (100).

8. Oil scrub column according to any of the preceding claims, **characterized in that** the oil scrub column (1) has a first liquid distributor (200), which is arranged in the oil section (21) and which is designed to subject the second mass transfer trays (100) to the second scrubbing medium (W'), where the first liquid distributor (200) is designed to introduce this second scrubbing medium (W') onto the edges (104) of the runoff elements (101) of an uppermost second mass transfer tray (100) of the oil section (21), so that this second scrubbing medium (W') flows off from the respective runoff element (101) via the runoff surfaces (102a, 103a) at both sides of the respective edge (104), where in particular the first liquid distributor (200) is arranged in the light oil section (21a) and this uppermost second mass transfer tray (100) is an uppermost second mass transfer tray (100) of the light oil section (21a), and where in particular a second liquid distributor (300) is arranged in the heavy oil section (21b), where in particular the second liquid distributor (300) is designed to subject the second mass transfer trays (100) of the heavy oil section (21b) to this third scrubbing medium (W"), and where in particular the second liquid distributor (300) is designed to introduce this third scrubbing medium (W") onto the edges (104) of the runoff elements (101) of an uppermost second mass transfer tray (100) of the heavy oil section (21b), so that this third scrubbing medium (W") flows off from the respective runoff element (101) via the runoff surfaces (102a, 103a) at both sides of the respective edge (104).

9. Column according to Claim 8, **characterized in that** the first and/or the second liquid distributors (200, 300) each have a plurality of cutouts (201) through which the respective scrubbing medium (W', W") can be introduced onto the edges (104) of the runoff elements (101) of the respective uppermost second mass transfer tray (100), where the cutouts (201) are each arranged perpendicularly above an edge (104) of an assigned runoff element (101).

10. Column according to Claim 8 or 9, **characterized in that** the first and/or the second liquid distributors (200, 300) each have a plurality of final distributor channels (202) which are each extended along said column cross section (Q) and also transversely to the runoff elements (101).

11. Column according to Claim 10, **characterized in that** the final distributor channels (202) each have a base (203) which is extended transversely to the longitudinal axis (L), and two side walls (204) starting from said base (203), where said side walls (204) each have an upper rim (205), and where the cutouts (201) are designed in the form of vacancies, more particularly rectangular vacancies, at the two upper rims (205).

12. Column according to Claim 11, **characterized in that** the first and/or second liquid distributors (200, 300) have at least two preliminary distributor channels (210), which are parallel to one another, are arranged above the final distributor channels (202) along the longitudinal axis (L) and are intended for feeding the final distributor channels (202) with the respective scrubbing medium (W', W"), where the preliminary distributor channels (210) are extended more particularly along the column cross section (Q), and where in particular the preliminary distributor channels (210) extend transversely to the final distributor channels (202).

13. Column according to Claim 12, **characterized in that** the preliminary distributor channels (210) each have a base (211) which is extended transversely to the longitudinal axis (L), and two side walls (212) starting from said base (211), where said side walls (212) each have an upper rim (213), at which cutouts (214) are designed in the form of vacancies, more particularly rectangular vacancies, via which the respective scrubbing medium (W', W") can be led into respectively one assigned final distributor channel (202), where in particular these cutouts (214) of the preliminary distributor channels (210) are arranged in each case perpendicularly above an assigned final distributor channel (202).

14. Column according to Claim 12 or 13, **characterized in that** the preliminary distributor channels (210) are connected to one another via at least one compensation channel (215).

## Revendications

1. Colonne de nettoyage d'huile, avec une enveloppe (10) s'étendant le long d'un axe longitudinal (L), qui entoure un espace intérieur (I) de la colonne (1), dans laquelle l'espace intérieur (I) est subdivisé en une partie essence (20) et une partie huile (21) disposée en dessous de celle-ci le long de l'axe longitudinal (L), qui est séparée de la partie essence (20) en particulier au moyen d'un plateau de cheminée (13), dans laquelle plusieurs premiers plateaux d'échange de matière (16, 16a) sont disposés dans la partie essence (20) et plusieurs deuxièmes plateaux d'échange de matière (100) sont disposés dans la partie huile (21), dans laquelle la colonne de nettoyage d'huile (1) est configurée pour guider un courant de gaz de craquage (S) à travers les deuxièmes plateaux d'échange de matière (100) de la partie huile (21) et ensuite à travers les premiers plateaux d'échange de matière (16, 16a) de la partie essence (20), dans laquelle la colonne de nettoyage d'huile (1) est configurée pour alimenter les deuxièmes plateaux d'échange de matière (100) dans la partie huile (21) avec un deuxième agent de nettoyage liquide (W') contenant des hydrocarbures, afin de séparer une fraction d'huile (F') hors du courant de gaz de craquage (S), et dans laquelle la colonne de nettoyage d'huile (1) est configurée pour alimenter les premiers plateaux d'échange de matière (16, 16a) dans la partie essence (20) avec un premier agent de nettoyage liquide (W) contenant des hydrocarbures, afin de séparer une fraction d'essence (F) hors du courant de gaz de craquage (S), **caractérisée en ce que** les deuxièmes plateaux d'échange de matière (100) présentent respectivement une multiplicité d'éléments d'écoulement (101) disposés parallèlement et à distance l'un de l'autre, en particulier en forme de cornières, dans laquelle les éléments d'écoulement (101) présentent respectivement une première et une deuxième faces d'écoulement (102a, 103a), dans laquelle les deux faces d'écoulement (102a, 103a) se rapprochent le long de l'axe longitudinal (L) en direction de la partie essence (20) et se rejoignent en formant une arête (104) s'étendant transversalement à l'axe longitudinal (L), de telle manière que le deuxième agent de nettoyage (W') déversé sur les arêtes (104) des éléments d'écoulement (101) s'écoule vers les deux côtés de l'arête respective (104) sur les faces d'écoulement (102a, 103a) de l'élément d'écoulement respectif (101), et dans laquelle le nombre de deuxièmes plateaux d'échange de matière (100) dans la partie huile (21) est plus grand que le nombre de plateaux d'échange de matière (16) dans la partie essence (20), et dans laquelle la partie essence (20) présente une plus petite longueur (A) le long de l'axe longitudinal (L) que la partie d'huile (21), et dans laquelle les premiers plateaux d'échange de matière (16) sont constitués par les plateaux perforés, des plateaux à cloches et/ou des plateaux à soupapes.

2. Colonne de nettoyage d'huile selon la revendication 1, **caractérisée en ce que** la longueur (A) de la partie essence (20) ne vaut pas plus que la moitié de la longueur (A') de la partie huile (21).

3. Colonne de nettoyage d'huile selon la revendication 1 ou 2, **caractérisée en ce que** la partie essence (20) présente 6 à 8, en particulier 7, premiers plateaux d'échange de matière (16).

4. Colonne de nettoyage d'huile selon l'une quelconque des revendications précédentes, **caractérisée en ce que** la partie huile (21) est subdivisée en une partie huile légère (21a) et une partie huile lourde (21b) disposée en dessous de celle-ci le long de l'axe longitudinal (L), dans lesquelles plusieurs deuxièmes plateaux d'échange de matière (100) sont respectivement disposés, dans laquelle en particulier la partie huile légère (21a) est séparée de la partie huile lourde (21b) au moyen d'un plateau de cheminée (14), et dans laquelle la colonne de nettoyage d'huile (1) est configurée pour guider le courant de gaz de craquage (S) à travers les deuxièmes plateaux d'échange de matière (100) de la partie huile lourde (21b) et ensuite à travers les deuxièmes plateaux d'échange de matière (100) de la partie huile légère (21a), dans laquelle la colonne de nettoyage d'huile (1) est configurée pour alimenter les deuxièmes plateaux d'échange de matière (100) dans la partie huile lourde (21b) avec un troisième agent de nettoyage liquide (W") contenant des hydrocarbures, afin de séparer une fraction d'huile lourde (F") hors du courant de gaz de craquage (S), et dans laquelle la colonne de nettoyage d'huile (1) est configurée pour alimenter les deuxièmes plateaux d'échange de matière (100) dans la partie huile légère (21a) avec un deuxième agent de nettoyage liquide (W') contenant des hydrocarbures, afin de séparer une fraction d'huile légère (F') hors du courant de gaz de craquage (S).

5. Colonne de nettoyage d'huile selon l'une quelconque des revendications précédentes, **caractérisée en ce que** la partie huile (21) présente 10 à 20, en particulier 16, deuxièmes plateaux d'échange de matière (100).

6. Colonne de nettoyage d'huile selon la revendication 4, **caractérisée en ce que** la partie huile légère (21a) présente 6 à 12, en particulier 8, deuxièmes plateaux d'échange de matière (100).

7. Colonne de nettoyage d'huile selon la revendication 4 ou 6, **caractérisée en ce que** la partie huile lourde (21b) présente 4 à 8, en particulier 8, deuxièmes plateaux d'échange de matière (100).

8. Colonne de nettoyage d'huile selon l'une quelconque des revendications précédentes, **caractérisée en ce que** la colonne de nettoyage d'huile (1) présente un premier répartiteur de liquide (200) disposé dans la partie huile (21), qui est configuré pour alimenter les deuxièmes plateaux d'échange de matière (100) avec le deuxième agent de nettoyage (W'), dans laquelle le premier répartiteur de liquide (200) est configuré pour déverser ce deuxième agent de nettoyage (W') sur les arêtes (104) des éléments d'écoulement (101) d'un deuxième plateau supérieur d'échange de matière (100) de la partie huile (21), de telle manière que ce deuxième agent de nettoyage (W') s'écoule vers les deux côtés de l'arête respective (104) sur les faces d'écoulement (102a, 103a) de l'élément d'écoulement respectif (101), dans laquelle en particulier le premier répartiteur de liquide (200) est disposé dans la partie huile légère (21a) et ce deuxième plateau supérieur d'échange de matière (100) est un deuxième plateau supérieur d'échange de matière (100) de la partie huile légère (21a), et dans laquelle en particulier un deuxième répartiteur de liquide (300) est disposé dans la partie huile lourde (21b), dans laquelle en particulier le deuxième répartiteur de liquide (300) est configuré pour alimenter les deuxièmes plateaux d'échange de matière (100) de la partie huile lourde (21b) avec ce troisième agent de nettoyage (W"), et dans laquelle en particulier le deuxième répartiteur de liquide (300) est configuré pour déverser ce troisième agent de nettoyage (W") sur les arêtes (104) des éléments d'écoulement (101) d'un deuxième plateau supérieur d'échange de matière (100) de la partie huile lourde (21b), de telle manière que ce troisième agent de nettoyage (W") s'écoule vers les deux côtés de l'arête respective (104) sur les faces d'écoulement (102a, 103a) de l'élément d'écoulement respectif (101).

9. Colonne selon la revendication 8, **caractérisée en ce que** le premier et/ou le deuxième répartiteurs de liquide (200, 300) présentent respectivement une multiplicité de sorties (201), à travers lesquelles l'agent de nettoyage respectif (W', W") peut être déversé sur les arêtes (104) des éléments d'écoulement (101) du deuxième plateau supérieur d'échange de matière respectif (100), dans laquelle les sorties (201) sont disposées verticalement au-dessus d'une arête (104) d'un élément d'écoulement associé (101).

10. Colonne selon la revendication 8 ou 9, **caractérisée en ce que** le premier et/ou le deuxième répartiteurs de liquide (200, 300) présentent respectivement une multiplicité de canaux de répartition d'extrémité (202), qui s'étendent respectivement le long de ladite section transversale de colonne (Q) ainsi que transversalement aux éléments d'écoulement (101).

11. Colonne selon la revendication 10, **caractérisée en ce que** les canaux de répartition d'extrémité (202) présentent respectivement un plateau (203) s'étendant transversalement à l'axe longitudinal (L) et deux parois latérales (204) partant de celui-ci, dans laquelle lesdites parois latérales (204) présentent chacune un bord supérieur (205), et dans laquelle les sorties (201) sont réalisées sous forme d'évidements en particulier rectangulaires sur les deux bords supérieurs (205).

12. Colonne selon la revendication 11, **caractérisée en ce que** le premier et/ou le deuxième répartiteurs de liquide (200, 300) présentent au moins deux canaux de pré-répartition (210) parallèles l'un à l'autre, disposés le long de l'axe longitudinal (L) au-dessus des canaux de répartition d'extrémité (202) pour alimenter les canaux de répartition d'extrémité (202) avec l'agent de nettoyage respectif (W', W"), dans laquelle les canaux de pré-répartition (201) s'étendent en particulier le long de la section transversale de colonne (Q), et dans laquelle en particulier les canaux de pré-répartition (210) s'étendent transversalement aux canaux de répartition d'extrémité (202).

13. Colonne selon la revendication 12, **caractérisée en ce que** les canaux de pré-répartition (210) présentent respectivement un plateau (211) s'étendant transversalement à l'axe longitudinal (L) et deux parois latérales (201) partant de celui-ci, dans laquelle lesdites parois latérales (212) présentent chacune un bord supérieur (213), sur lesquels sont formées des sorties (214) sous forme d'évidements en particulier rectangulaires, par lesquelles l'agent de nettoyage respectif (W', W") peut être respectivement introduit dans un canal de répartition d'extrémité (202), dans laquelle en particulier ces sorties (214) des canaux de pré-répartition (210) sont respectivement disposées verticalement au-dessus d'un canal de répartition d'extrémité associé (202).

14. Colonne selon la revendication 12 ou 13, **caractérisée en ce que** les canaux de pré-répartition (210) sont reliés les uns aux autres par au moins un canal d'équilibrage (215).
